# EUROPEAN PATENT APPLICATION

(11) **EP 2 559 741 A2**
(43) Date of publication of application: **20.02.2013**
(21) Application number: 12178441.7
(22) Date of filing: 30.07.2012
(51) Int. Cl.: C09D 11/00, C09D 11/10

(54) **Ink composition, image forming method, and printed material**

(30) Priority: 15.08.2011 JP 2011177712
(71) Applicant: Fujifilm Corporation, Minato-ku Tokyo (JP)
(72) Inventor: Hironaka, Koji, Kanagawa (JP); Shimohara, Norihide, Kanagawa (JP)
(74) Representative: HOFFMANN EITLE

(57) **Abstract**

An ink composition comprising (A) a polymer compound having a partial structure represented by the following Formula (I) in a side chain thereof, and (B) a coloring material, wherein the content of (A) the polymer compound is from 0.1 to 20% by mass: 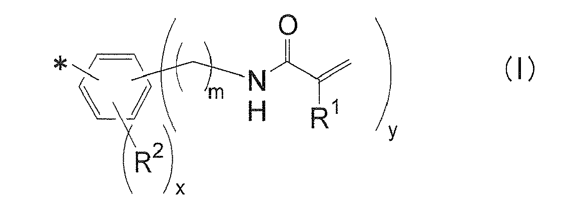 wherein m represents an integer from 0 to 10; x represents an integer from 0 to 4; y represents an integer from 1 to 3; 1≤x+y≤5 is satisfied; R¹ represents a hydrogen atom or a methyl group; when a plurality of R¹s are present, they may be identical or different; R² represents an alkyl group, an alkoxy group, or an alkenyl group; when a plurality of R²s are present, they may be identical or different, and may be bonded to each other to form a ring; and the symbol * represents a bonding position with an adjacent site.

## Description

### TECHNICAL FIELD

The present invention relates to an ink composition for inkjet recording, an image forming method, and a printed material.

### BACKGROUND ART

Examples of the image recording method for forming an image on a recording medium such as paper based on the image data signal include electrographic systems, sublimation and thermofusible heat transfer recording systems, and inkjet systems. Among the ink compositions used for image recording by an inkjet system, active energy ray-curable aqueous ink is suitable for image printing, pretreatment for imparting printability to a recording medium, and aftertreatment such as protection and decoration of the printed image. In addition, since the aqueous ink is composed mainly of water, it achieves high safety, and its low viscosity allows the application to high density inkjet recording. Therefore, the aqueous ink technology has many marked features and possibilities.

Most of commercially available active energy ray-curable inks include combinations of monomers or oligomers having relatively low molecular weights. Therefore, if compounds having low molecular weights such as unreacted monomers or oligomers remain after curing, they exude to the image surface to cause stickiness. In addition, since they are poorly miscible with the coloring material, they cause aggregation if the coloring material is a pigment, or cause deposition or crystallization if the coloring material is a dye. When used for inkjet recording, they may cause various problems such as the change of the color tone of the printed image and nozzle clogging.

In order to solve these problems, active ray-curable compositions for aqueous inkjet inks are proposed in which a polymerizable double bond group is introduced in the side chain of polyvinyl alcohol (for example, see Japanese Patent Application Laid-Open (JP-A) No. 2008-045047).

In addition, JP-A No. 5-009244 proposes a resin composition for solder resist, the composition including an unsaturated group-containing carboxylic acid compound which has been prepared by the reaction between a polymer compound having a carboxyl group and an epoxy compound having an acrylamide group, and a diluent containing an organic solvent or a reactive monomer.

### SUMMARY OF INVENTION

The method described in JP-A No. 2008-045047 achieves insufficient jetting stability, and the image and printed material obtained by the method have insufficient water resistance. Therefore, the method cannot fulfill the market demands requiring water and solvent resistance under severe conditions.
The resin composition for solder resist described in JP-A No. 5-009244 cannot provide an ink composition which produces an image with excellent water and solvent resistance. When the resin composition for solder resist described in JP-A No. 5-009244 is used as an inkjet recording ink, it shows insufficient jettability. The resin composition for solder resist described in JP-A No. 5-009244 is merely a resin composition suitable for solder resist developable with a dilute alkaline aqueous solution.

In view of the above-described circumstances, an object of the present invention is to provide an ink composition which provides excellent water resistance and solvent resistance of the recorded image, and has excellent jettability when used as an ink composition for inkjet recording.
Another object of the invention is to provide an image forming method using the ink composition, and a printed material.

Specific means for achieving the above-described objects are as follows.
<1> An ink composition comprising (A) a polymer compound having a partial structure represented by the following Formula (I) in a side chain thereof, and (B) a coloring material, wherein the content of (A) the polymer compound having the partial structure represented by Formula (I) in the side chain thereof is from 0.1 to 20% by mass with respect to the total mass of the ink composition:

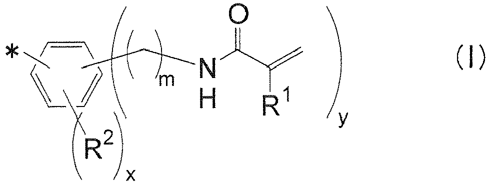

wherein m represents an integer from 0 to 10; x represents an integer from 0 to 4; y represents an integer from 1 to 3; 1 ≤ x + y ≤ 5 is satisfied; R¹ represents a hydrogen atom or a methyl group; when a plurality of R¹s are present, the plurality of R¹s may be identical or different; R² represents an alkyl group, an alkoxy group, or an alkenyl group; when a plurality of R²s are present, the plurality of R²s may be identical or different, and may be bonded to each other to form a ring; and the symbol * represents a bonding position with an adjacent site.

<2> The ink composition of <1>, wherein (A) the polymer compound having the partial structure represented by Formula (I) in the side chain thereof is a polymer containing a repeating unit represented by the following Formula (II):

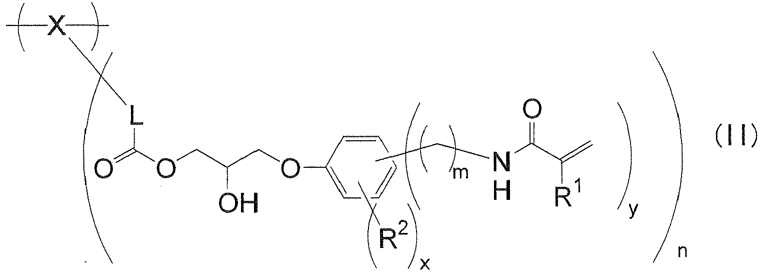

wherein R¹, R², x, and y have the same definitions as R¹, R², x, and y in Formula (I), respectively; L represents a single bond or a divalent linking group; X represents a linking group having a valence of (2 + n); m represents 0 or 1; n represents an integer from 1 to 4; and 1 ≤ x + y ≤ 5 is satisfied.

<3> The ink composition of <2>, wherein the repeating unit represented by Formula (II) is a repeating unit represented by the following Formula (II-A):

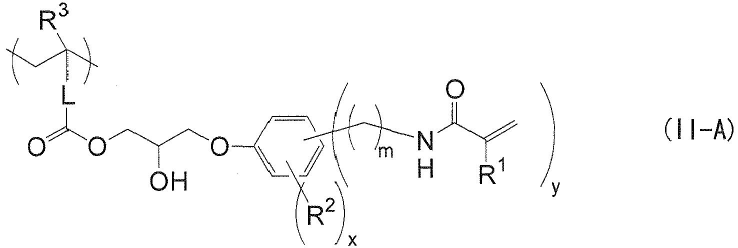

wherein R³ represents a hydrogen atom or a methyl group; and R¹, R², L, x, y, and m have the same definitions as R¹, R², L, x, y, and m in Formula (II), respectively.

<4> The ink composition of <3>, wherein the repeating unit represented by Formula (II-A) is a repeating unit represented by the following Formula (II-B):

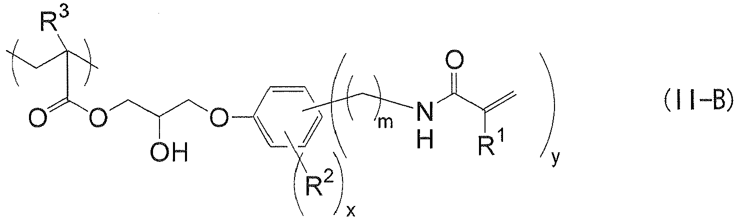

wherein R¹, R², R³, x, y, and m have the same definitions as R¹, R², R³, x, y, and m in Formula (II-A), respectively.

<5> The ink composition of any one of <1> to <4>, wherein the content of (A) the polymer compound having the partial structure represented by Formula (I) in the side chain thereof is from 0.5% by mass to 15% by mass with respect to the total mass of the ink composition.

<6> The ink composition of any one of <1> to <5>, wherein the content of a (meth)acrylamide group in the partial structure represented by Formula (I) in (A) the polymer compound having the partial structure represented by Formula (I) in the side chain thereof is from 0.1 mmol/g to 4 mmol/g with respect to the total mass of (A) the polymer compound.
<7> The ink composition of any one of <1> to <6>, wherein the weight average molecular weight of (A) the polymer compound having the partial structure represented by Formula (I) in the side chain thereof is from 2,000 to 200,000.

<8> The ink composition of any one of <1> to <7>, further comprising (C) an organic solvent.
<9> The ink composition of <8>, wherein the content of (C) the organic solvent is from 5 to 95% by mass with respect to the total mass of the ink composition.
<10> The ink composition of <8> or <9>, wherein the content of (C) the organic solvent is from 40 to 90% by mass with respect to the total mass of the ink composition.

<11> The ink composition of any one of <1> to <10>, further comprising (D) water.
<12> The ink composition of <11>, wherein the content of (D) the water is from 5 to 95% by mass with respect to the total mass of the ink composition.
<13> The ink composition of <11> or <12>, wherein the content of (D) the water is from 40 to 90% by mass with respect to the total mass of the ink composition.

<14> The ink composition of any one of <1> to <13>, which is used for inkjet recording.
<15> An image forming method comprising:
an ink application step of applying the ink composition of any one of <1> to <14> to a recording medium;
a step of heat drying the applied ink composition; and
an irradiation step of irradiating the heat dried ink composition with an active energy ray.

<16> The image forming method of <15>, wherein the ink application step is a step of applying the ink composition to the recording medium by an inkjet method.
<17> A printed material having an image on a recording medium, wherein the image is formed by the ink composition of any one of <1> to <14>, or by the image forming method of <15> or <16>.

The mechanism of the present invention has not been revealed, but the inventors presume the mechanism as follows. The polymer compound in the invention having the partial structure represented by Formula (I) in its side chain is a polymer compound prepared by adding an epoxy cyclic compound having the partial structure represented by Formula (I) to a polymer having a carboxyl group. It is presumed that since the unsaturated carbon-carbon bond contained in the partial structure represented by Formula (I) is located at the end of the polymer side chain, the ink composition including the polymer compound of the invention has markedly improved curability with respect to radiation or heat, and the recorded image has excellent water resistance and solvent resistance.
Further, it is presumed that since the partial structure represented by Formula (I) contained in the polymer compound has an aromatic ring, the dispersibility of the coloring material is improved, and that since the content of the polymer compound is from 0.1 to 20% by mass with respect to the total mass of the ink composition, the dispersion stability of (B) the coloring material is excellent in the ink composition, so that there is no clogging of the inkjet nozzles and pipes caused by aggregation of the coloring material during jetting of the ink composition for inkjet recording, and stable jettability is achieved.

According to the invention, there is provided an ink composition which provides excellent water resistance and solvent resistance of the recorded image, and has excellent jettability when used as an ink composition for inkjet recording.
According to the invention, there are also provided an image forming method using the ink composition, and a printed material.

### DESCRIPTION OF EMBODIMENTS

### «Ink composition»

The components of the ink composition of the invention are described below in detail. The ink composition of the invention includes (A) a polymer compound having a partial structure represented by the following Formula (I) in a side chain thereof (hereinafter may be referred to as "specific polymer compound"), and (B) a coloring material, the content of the specific polymer compound being from 0.1 to 20% by mass with respect to the total mass of the ink composition.

### <(A) Polymer compound having a partial structure represented by Formula (I) in a side chain thereof = specific polymer compound>

The ink composition of the invention includes (A) a polymer compound having a partial structure represented by the following Formula (I) in a side chain thereof (specific polymer compound).

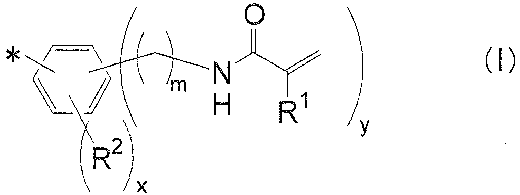

In Formula (I), m represents an integer from 0 to 10; x represents an integer from 0 to 4; y represents an integer from 1 to 3; 1 ≤ x + y ≤ 5 is satisfied; R¹ represents a hydrogen atom or a methyl group; when a plurality of R¹s are present, the plurality of R¹s may be identical or different; R² represents an alkyl group, an alkoxy group, or an alkenyl group; when a plurality of R²s are present, the plurality of R²s may be identical or different, and may be bonded to each other to form a ring; and the symbol * represents a bonding position with an adjacent site.

In Formula (I), the alkyl group represented by R² may be an alkyl group having 1 to 10 carbon atoms, and preferably an alkyl group having 1 to 5 carbon atoms. Specific examples of the alkyl group include a methyl group, an ethyl group, a propyl group, an isopropyl group, an n-butyl group, an s-butyl group, and a t-butyl group. Among these groups, a methyl group, an ethyl group, and an isopropyl group are preferred, and a methyl group is particularly preferred.

In Formula (I), the alkoxy group represented by R² may be an alkoxy group having 1 to 10 carbon atoms, and preferably an alkoxy group having 1 to 5 carbon atoms. Specific examples of the alkoxy group include a methoxy group, an ethoxy group, a propoxy group, an isopropoxy group, an n-butoxy group, an s-butoxy group, and a t-butoxy group. Among these groups, a methoxy group and an ethoxy group are preferred, and a methoxy group is particularly preferred.
In Formula (I), the alkenyl group represented by R² may be an alkenyl group having 2 to 10 carbon atoms, and preferably an alkenyl group having 2 to 5 carbon atoms. Specific examples of the alkenyl group include a vinyl group and an allyl group.

In Formula (I), in a case in which plural R²s are bonded to each other to form a ring, R²s bonded to each other represent, for example, an alkylene group having 3 to 4 carbon atoms, an alkenylene group having 3 to 4 carbon atoms or an alkadienylene group having 4 carbon atoms, and preferably an alkadienylene group having 4 carbon atoms. Specific examples of these groups include a propenylene group and a butadienylene group. Among these groups, a butadienylene group is preferred. Examples of the formed ring include a benzene ring, and the ring may have a substituent.
In Formula (I), in a case in which plural R²s are present, the plural R²s may be identical or different.

In Formula (I), m represents an integer from 0 to 10, preferably an integer from 0 to 5, and particularly preferably an integer from 0 to 2.
The symbol x represents an integer from 0 to 4, and preferably an integer from 0 to 2. The symbol y represents an integer from 1 to 3, and preferably an integer from 1 to 2.
1 ≤ x + y ≤ 5 is satisfied, and preferably 1 ≤ x + y ≤ 3 is satisfied.

In Formula (I), it is particularly preferred that R¹ be a hydrogen atom, R² be a methyl group, m be an integer from 0 to 2, x be an integer from 0 to 2, and 1 ≤ x + y ≤ 3 be satisfied.

(A) The polymer compound having the partial structure represented by Formula (I) in the side chain thereof is preferably a polymer containing a repeating unit represented by the following Formula (II).

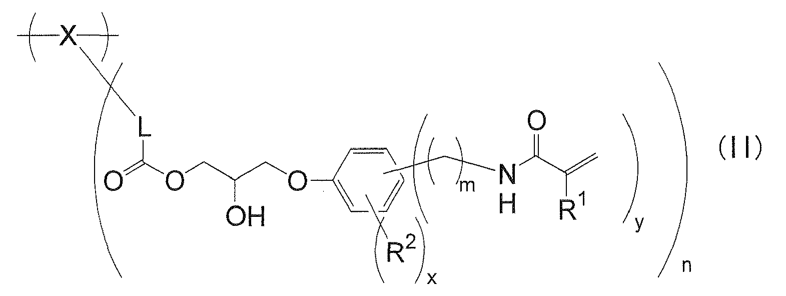

In Formula (II), R¹, R², x, and y have the same definitions as R¹, R², x, and y in Formula (I), respectively; L represents a single bond or a divalent linking group; X represents a linking group having a valence of (2 + n); m represents 0 or 1; n represents an integer from 1 to 4; and 1 ≤ x + y ≤ 5 is satisfied.

In Formula (II), X represents a linking group having a valence of (2 + n); n represents an integer from 1 to 4, preferably from 1 to 3, more preferably from I to 2, and particularly preferably 1.
The linking group having a valence of (2 + n) is preferably a linking group having 1 to 10 carbon atoms. Examples of the linking group having a valence of (2 + n) and having 1 to 10 carbon atoms include a residue obtained by removing (2 + n) hydrogen atoms from at least one compound selected from the group consisting of alkanes or cycloalkanes having 1 to 10 carbon atoms. The alkane residue represented by the linking group having a valence of (2 + n) may be linear or branched. Specific examples thereof include, but not limited to, a residue obtained by removing (2 + n) hydrogen atoms from an alkane or cycloalkane such as methane, ethane, propane, 2-methylpropane, butane, 2-methylbutane, pentane, or cyclohexane. The carbon number of X is preferably from 3 to 7, and most preferably from 3 to 5. These alkane and cycloalkane residues may contain, for example, an ether bond, an amide bond, an aromatic ring, a hydroxyl group, or a carboxyl group.

Among these groups, X is preferably a residue obtained by removing (2 + n) hydrogen atoms from ethane, propane, 2-methylpropane having two hydroxyl groups, or 2-methylbutane having two hydroxyl groups.

In Formula (II), the divalent linking group represent by L is preferably an alkylene group having 1 to 20 carbon atoms, an arylene group having 6 to 20 carbon atoms, or an aralkylene group having 7 to 30 carbon atoms, and even more preferably an alkylene group having 1 to 20 carbon atoms. The alkylene group contained in the alkylene group and aralkylene group may be linear, branched, or cyclic. The alkylene group, arylene group, and aralkylene group may contain an ether bond, an ester bond, an amide bond, an urethane bond, or a sulfide bond, and may be substituted with a hydroxyl group.

In a case in which L is an alkylene group having 1 to 20 carbon atoms, the alkylene group may be linear, branched, or cyclic. In a case in which L is an alkylene group, the carbon number of the alkylene group is more preferably from 1 to 12, and even more preferably from 1 to 8. Specific examples of the alkylene group represented by L include -CH₂-, -C₂H₄-, -C(CH₃)₂-CH₂-, -CH₂C(CH₃)₂CH₂-, -C₆H₁₂-, -C₄H₇(C₄H₉)C₄H₈-, -C₁₈H₃₆-, 1,4-trans-cyclohexylene group, -C₂H₄-OCO-NH-C₂H₄-, -C₂H₄-OCO-C₂H₄-, -C₂H₄-O-, -CH₂-O-CH₂-, -C₂H₄-O-CH₂-, -C₂H₄-O-C₅H₁₀-O-, -C₂H₄-O-C₂H4-O-CH₂-, -C₃H₆-O-CH₂-, -C₄H₈-O-CH₂-, -C₅H₁₀-O-CH₂-, -C₆H₁₂-O-CH₂-, -C₂H₄-NH-COO-, -C₂H₄-O-CH₂-CH(OH)-CH₂-OCO-, -CH₂-CH(OH)-CH₂-, -C₂H₄-OCO-, -C₂H₄-O-C₅H₁₀-, -CH₂-O-C₅H₉(C₅H₁₁)-, -C₂H₄-NH-COO-C₂H₄-, -C₂H₄-CONH-C₂H₄-, -C₄H₈-OCONH-C₆H₁₂-, -CH₂-OCONHC₁₀H₂₀-, and -CH₂CH(OH)CH₂-.

In a case in which L is an arylene group having 6 to 20 carbon atoms, the carbon number of the arylene group is preferably from 6 to 18, more preferably from 6 to 14, and particularly preferably from 6 to 10. Specific examples of the arylene group represented by L include a phenylene group, a biphenylene group, -C₆H₄-CO-C₆H₄-, -C₆H₄-S-, and a naphthylene group.

In a case in which L is an aralkylene group having 7 to 30 carbon atoms, the carbon number of the aralkylene group is preferably from 7 to 18, more preferably from 7 to 14, and particularly preferably from 7 to 10. Specific examples of the aralkylene group include ₋C₃H₆-C₆H₄-, ₋C₂H₄-C₆H₄-C₆H₄-, ₋CH₂-C₆H₄-C₆H₄-C₂H₄-, -C₂H₄-OCO-C₆H₄-, -C₆H₄-O-CH₂-, -C₂H₄-C₆H₄-O-CH₂- -C₂H₄-C₆H₃(O-CH₃)-O-CH₂-, and -C₂H₄-O-C₂H₄-C₆H₄-S.

Among these groups, L is preferably -CH₂- or -C₂H₄-.

The repeating unit represented by Formula (II) is preferably a repeating unit represented by the following Formula (II-A).

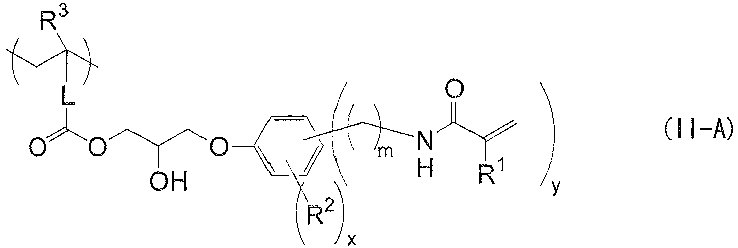

In Formula (II-A), R³ represents a hydrogen atom or a methyl group; R¹, R², L, x, y, and m have the same definitions (and the same preferable definitions) as R¹, R², L, x, y, and m in Formula (II), respectively.

Further, the repeating unit represented by Formula (II-A) is preferably a repeating unit represented by the following Formula (II-B).

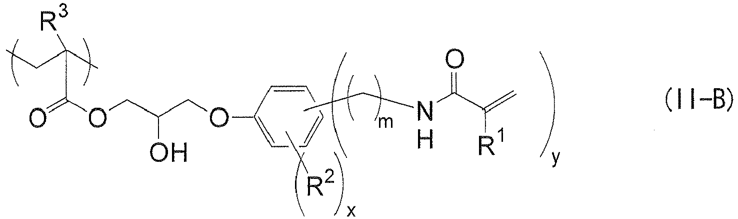

In Formula (II-B), R¹, R², R³. x, y, and m have the same definitions (and the same preferable definitions) as R¹, R², R³, x, y, and m in Formula (II-A), respectively.

The specific polymer compound in the invention may be synthesized, as shown by the following scheme, through the reaction of a polymer having a carboxyl group (a polymer including a repeating unit having a carboxyl group) with an epoxy compound having a partial structure having a (meth)acrylamide group represented by Formula (I).
The following scheme shows an example of the case in which L in Formula (II) is a single bond. This scheme also applies to the case in which L is a divalent linking group.
In the following scheme, X represents the X in Formula (II).

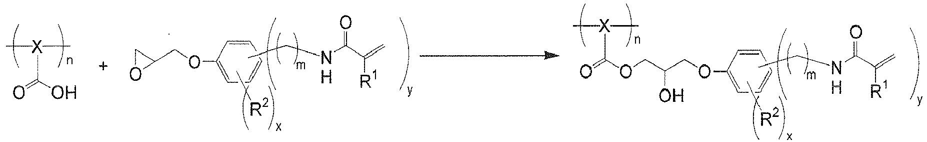

Examples of the repeating unit having a carboxyl group in the above-described scheme include, but not limited to, the following structures.
Among the following structures, a repeating unit containing an acrylic acid or methacrylic acid structure is particularly preferred.
The symbol n in the above-described scheme and the symbol n in the following structures represent the number of repeating units. In the following structures, the main chain structure of (b-6) to (b-14) is a polyurethane structure. Among the following structures, (b-1), (b-2), (b-3), and (b-4) are preferred, and (b-1) and (b-2) are particularly preferred.

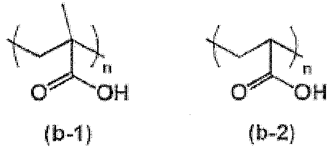

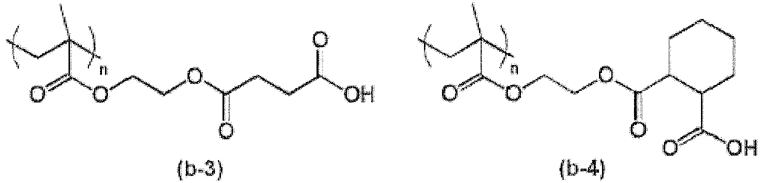

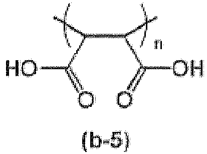

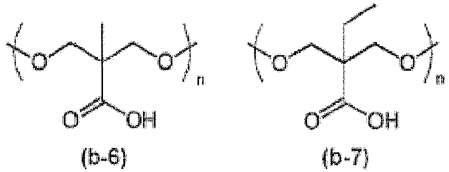

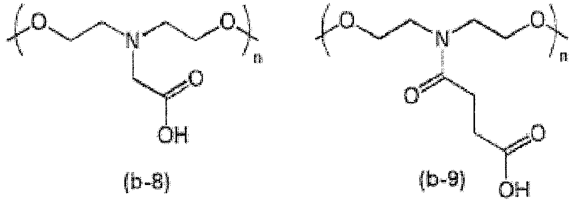

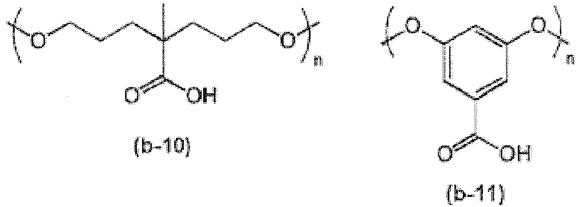

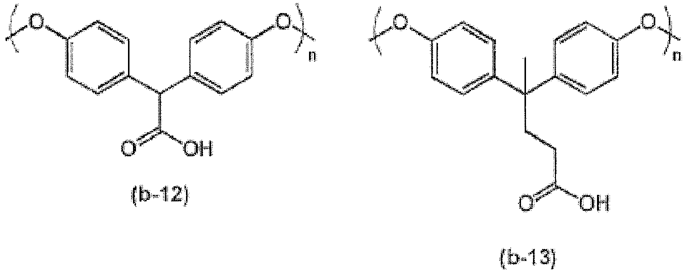

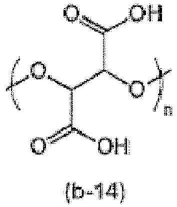

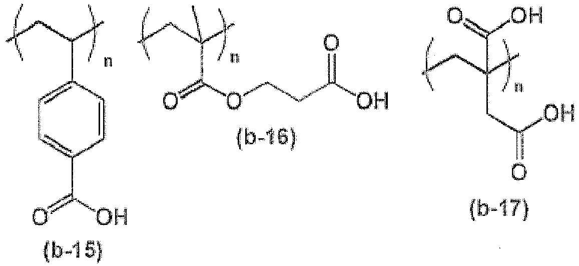

The polymer having a carboxyl group may be obtained by polymerization of a monomer having a carboxyl group. Alternatively, the polymer having a carboxyl group may be obtained by copolymerization of a monomer having a carboxyl group and a monomer having no carboxyl group.

Examples of the monomer having no carboxyl group include radically polymerizable compounds such as (meth)acrylates, anhydrides having an ethylenically unsaturated group, acrylonitrile, styrene, various unsaturated polyesters, unsaturated polyethers, unsaturated polyamides, and unsaturated urethane.

Specific examples thereof include (meth)acryl derivatives such as 2-hydroxyethyl (meth)acrylate, butoxyethyl (meth)acrylate, carbitol (meth)acrylate, cyclohexyl (meth)acrylate, tetrahydrofurfuryl (meth)acrylate, tridecyl (meth)acrylate, 2-phenoxyethyl (meth)acrylate, bis(4-(meth)acryloxypolyethoxyphenyl)propane, N-methylol acrylamide, diacetone (meth)acrylamide, epoxy (meth)acrylate, isobomyl (meth)acrylate, dicyclopentenyl (meth)acrylate, dicyclopentenyl oxyethyl (meth)acrylate, dicyclopentanyl (meth)acrylate, methyl (meth)acrylate, n-butyl (meth)acrylate, allyl (meth)acrylate, glycidyl (meth)acrylate, benzyl (meth)acrylate, dimethylamino methyl (meth)acrylate, polyethylene glycol dimethacrylate, polypropylene glycol dimethacrylate, and
2,2-bis(4-methacryloxypolyethoxyphenyl)propane; and allyl compound derivatives such as allyl glycidyl ether. More specifically, commercial products described in, for example, "Crosslinking Agent Handbook" edited by Shinzo Yamashita, (1981, Taiseisha Ltd.); "UV-EB Curing Handbook (Genryohen) edited by Kiyomi Kato, (1985, Kobunshi Kankokai); "Application and Market of UV-EB Curing Technology" edited by RadTech Japan, p. 79, (1989, CMC Inc.); and "Polyester Resin Handbook" authored by Eiichiro Takiyama, (1988, The Nikkan Kogyo Shimbun, Ltd.), or radically polymerizable monomers known to those skilled in the art may be used.

The polymer having a carboxyl group may be obtained through the reaction of a polyalcohol (preferably a divalent alcohol) having a carboxyl group with a diisocyanate compound. Examples of the diisocyanate compound include, 4,4'-diphenylmethane diisocyanate (MDI), 2,4- or 2,6-tolylene diisocyanate (TDI), m- or p-phenylene diisocyanate, 1,3- or 1,4-xylylene diisocyanate (XDI), 1,5-naphthalene diisocyanate (NDI), 3,3'-dimethyl-4,4'-biphenylene diisocyanate (TODI), hexamethylene diisocyanate (HDI), hydrogenated MDI (H12MDI), and isophorone diisocyanate (IPDI).

The specific polymer compound of the invention is synthesized through, as shown by the above scheme, the addition reaction between a polymer having a carboxyl group with an epoxy compound having a partial structure having a (meth)acrylamide group represented by Formula (I).
The epoxy compound having a partial structure having a (meth)acrylamide group represented by Formula (I) may be any compound as long as it has an epoxy ring and a partial structure having a (meth)acrylamide group represented by Formula (I). Preferred examples of the compound include the following compounds. Among the following compounds, (m-1) to (m-3) are particularly preferred. In the invention, the examples will not be limited to these compounds.

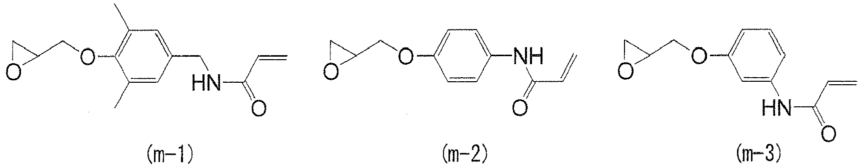

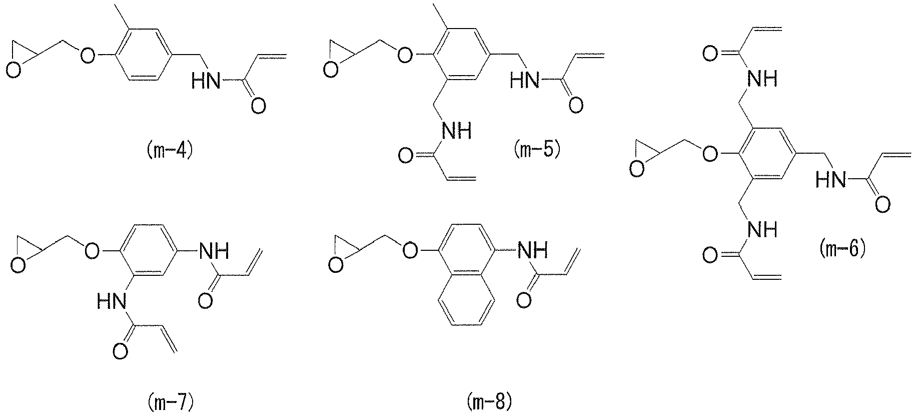

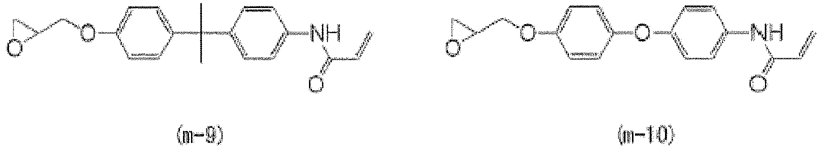

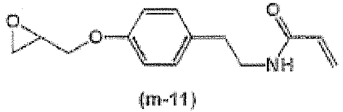

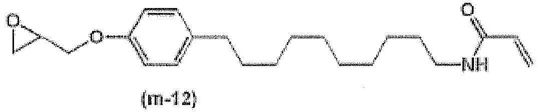

In a case in which the ink composition of the invention includes water, the specific polymer compound is preferably water-soluble or water-dispersible, and is even more preferably water-soluble.
In the invention, "water-soluble or water-dispersible" means that 1 g of the specific polymer compound can be dissolved or uniformly dispersed in 30 ml or less of water at 25°C to be invisible to the naked eye. The specific polymer compound is more preferably dissolved or dispersed in 20 ml or less of water, and particularly preferably in 10 ml or less of water.

In a case in which the ink composition of the invention includes water, the specific polymer compound preferably has a water-soluble group. The water-soluble group in the specific polymer compound is not particularly limited as long as the group imparts water solubility or water dispersibility to the specific polymer compound. The water-soluble group which may be contained in the specific polymer compound is not particularly limited, and may be a nonionic water-soluble group or an ionic water-soluble group such as an anionic or cationic group.

The nonionic water-soluble group used in the invention is not particularly limited, and examples thereof include a residue obtained by removing one hydrogen atom from a heterocyclic compound containing a nitrogen atom or an oxygen atom, amide groups, carbamoyl groups, alkyl-substituted carbamoyl groups, alcoholic hydroxyl groups, and groups having a polyalkyleneoxy structure. Among these groups, carbamoyl groups, alkyl-substituted carbamoyl groups, alcoholic hydroxyl groups, and groups having a polyalkyleneoxy structure are preferred, and alcoholic hydroxyl groups and groups having a polyalkyleneoxy structure are even more preferred.

Examples of the heterocyclic compound containing a nitrogen atom or an oxygen atom include lactones such as γ-butyrolactone, 2-pyrrolidone, cyclic ureas such as ethylene urea, cyclic carbonates such as ethylene carbonate and propylene carbonate, cyclic ethers such as tetrahydrofuran and 1,4-dioxane, and crown ethers such as 12-crown-4.

The amide group is not particularly limited, and the preferred examples thereof include the group represented by the following Formula (11):

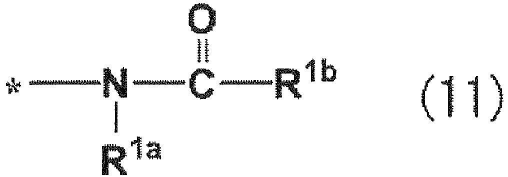

wherein R^{1a} and R^{1b} each independently represent a hydrogen atom or an alkyl group; R^{1a} and R^{1b} may be bonded to each other to form a four- to six-membered ring.

In Formula (11), R^{1a} and R^{1b} each independently represent a hydrogen atom or an alkyl group. The alkyl group represented by the R^{1a} and R^{1b} may be linear or branched, and may contain a -COO- bond, a -O- bond, or a -NH- bond. The carbon number of the alkyl group is preferably from 1 to 10, more preferably from 1 to 6, and particularly preferably from 1 to 3. R^{1a} and R^{1b} may be bonded to each other to form a four- to six-membered ring. These groups may have any substituent or no substituent, but preferably has no substituent. Specific examples of the alkyl group represented by R^{1a} and R^{1b} include a methyl group and a t-butyl group.

In Formula (11), preferred examples of the substituent which may be contained in R^{1a} and R^{1b} include a hydroxyl group.

Examples of the alkyl-substituted carbamoyl group include a monoalkyl carbamoyl group in which the hydrogen atom bonded to N of the carbamoyl group is substituted with an alkyl group, or a dialkyl carbamoyl group in which two hydrogen atoms bonded to N of the carbamoyl group are substituted with alkyl groups. Specifically, the group represented by the following Formula (12) is preferred:

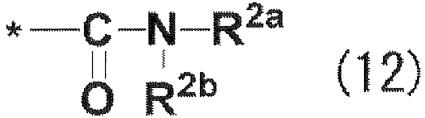

wherein R^{2a} and R^{2b} each independently represent a hydrogen atom or an alkyl group; R^{2a} and R^{2b} may be bonded to each other to form a four- to six-membered ring.

In Formula (12), R^{2a} and R^{2b} each independently represent a hydrogen atom or an alkyl group. The alkyl group represented by R^{2a} and R^{2b} may be linear or branched, and may contain an -O- bond, a -COO- bond, or a -C(=O)- bond. The carbon number of the alkyl group is preferably from 1 to 10, more preferably from 1 to 6, and particularly preferably
from 1 to 3. R^{2a} and R^{2b} may be bonded to each other to form a four- to six-membered ring. Specific examples of the alkyl group represented by R^{2a} and R^{2b} include, but not limited to, a methyl group, and an ethyl group. These groups may have any substituent or no substituent, but preferably has no substituent.

In Formula (12), preferred examples of the substituent which may be contained in R^{2a} and R^{2b} include an alkoxy group having 1 to 2 carbon atoms and a hydroxyl group.

Preferred examples of the group having a polyalkyleneoxy structure include, but not limited to, the group represented by following Formula (13):

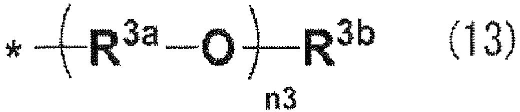

wherein R^{3a} represents an alkylene group, and R^{3b} represents a hydrogen atom or an alkyl group; n3 represents an integer from 4 to 50; the plural R^{3a}s may be identical or different.

In Formula (13), R^{3a} represents an alkylene group. The alkylene group represented by R^{3a} may be linear, branched or cyclic, and may contain a -O- bond or a -COO- bond. The carbon number of the alkylene group is preferably from 1 to 10, preferably from 1 to 6, and particularly preferably from 1 to 3. In the group represented by Formula (13), the plural R^{3a}s may be identical or different, and are preferably identical. These groups may have any substituent or no substituent, but preferably has no substituent. Specific examples of the alkylene group represented by R^{3a} include an ethylene group.

In Formula (13), preferred examples of the substituent which may be contained in R^{3a} include an alkoxy group having 1 to 2 carbon atoms and a hydroxyl group.

In Formula (13), R^{3b} represents a hydrogen atom or an alkyl group. The alkyl group represented by R^{3b} may be linear, branched, or cyclic, and its carbon number is preferably from 1 to 10, more preferably from 1 to 6, and particularly preferably from 1 to 3. Specific examples of the alkyl group represented by R^{3b} include a methyl group and an ethyl group.

In Formula (13), n3 represents an integer from 4 to 50, more preferably an integer from 5 to 40, and even more preferably an integer from 10 to 30.

The ionic water-soluble group used in the invention is preferably a group selected from the group consisting of carboxyl groups, sulfo groups, phosphoric acid groups, phosphonic acid groups, salts thereof, and quaternary ammonium salts. Examples of the salt include metal salts and onium salts.
The ionic water-soluble group is more preferably a group selected from the group consisting of carboxyl groups, sulfo groups, phosphoric acid groups, phosphonic acid groups, and salts thereof, even more preferably a group selected from the group consisting of carboxyl groups, sulfo groups, and salts thereof, and particularly preferably a carboxyl group or its salt.

The metal salt of the carboxyl group is preferably an alkali metal salt of a carboxyl group. Specific examples thereof include -COOLi, -COONa, and -COOK. Among them, -COONa and -COOK are preferred.

Examples of the onium salt of a carboxyl group include ammonium salts, pyridinium salts, and phosphonium salts of a carboxyl group. Among them, ammonium salts are preferred. Specific examples thereof include tetraalkyl ammonium salts and trialkylaryl ammonium salts of a carboxyl group. Among them, tetraalkyl ammonium salts of a carboxyl group are preferred. The alkyl group forming the ammonium salt is preferably an alkyl group having 1 to 4 carbon atoms, and the aryl group is preferably a phenyl group.

The metal salt of a sulfo group is preferably an alkali metal salt of a sulfo group. Specific examples thereof include -SO₃Li, -SO₃Na, and -SO₃K. Among them, -SO₃Na and -SO₃K are preferred.

Examples of the onium salt of a sulfo group include ammonium salts, pyridinium salts, and phosphonium salts of a sulfo group, and ammonium salts are preferred. Specific examples thereof include tetraalkyl ammonium salts and trialkylaryl ammonium salts of a sulfo group. Among them, tetraalkyl ammonium salts of a sulfo group are preferred. The alkyl group forming the ammonium salt is preferably an alkyl group having 1 to 4 carbon atoms, and the aryl group is preferably a phenyl group.

The metal salt of a phosphoric acid group is preferably an alkali metal salt of a phosphoric acid group. Specific examples thereof include sodium salts and potassium salts of a phosphoric acid group. Among them, sodium salts of a phosphoric acid group are preferred.

Examples of the onium salt of a phosphoric acid group include ammonium salts, pyridinium salts, and phosphonium salts of a phosphoric acid group. Among them, ammonium salts are preferred. Specific examples thereof include tetraalkyl ammonium salts and trialkylaryl ammonium salts of a phosphoric acid group. Among them, tetraalkyl ammonium salts of a phosphoric acid group are preferred. The alkyl group forming the ammonium salt is preferably an alkyl group having 1 to 4 carbon atoms, and the aryl group is preferably a phenyl group.

The metal salt of a phosphonic acid group is preferably an alkali metal salt of a phosphonic acid group. Specific examples thereof include sodium salts and potassium salts of a phosphonic acid group. Among them, sodium salts of a phosphonic acid group are preferred.

Examples of the onium salt of a phosphonic acid group include an ammonium salt, a pyridinium salt, and a phosphonium salt of a phosphonic acid group, and an ammonium salt of a phosphonic acid group is preferred. Specific examples thereof include tetraalkyl ammonium salts and trialkylaryl ammonium salts of a phosphonic acid group. Among them, tetraalkyl ammonium salts of a phosphonic acid group are preferred. The alkyl group forming the ammonium salt is preferably an alkyl group having 1 to 4 carbon atoms, and the aryl group is preferably a phenyl group.

Examples of the quaternary ammonium salt include salts composed of a quaternary ammonium ion and a halide ion, salts composed of a quaternary ammonium ion and an organic anion such as a sulfonate ion, a phosphate ion, or a phosphonate ion, salts composed of a quaternary ammonium ion and an anion containing a fluorine atom, such as BF₄⁻, PF₆⁻, or SbF₆⁻. Among them, salts composed of a quaternary ammonium ion and a halide ion are preferred.
The quaternary ammonium ion preferably has a trialkyl ammonium structure. The carbon number of the alkyl group is preferably from 1 to 10, and even more preferably from 1 to 5. Specifically, the quaternary ammonium preferably has a trimethyl ammonium structure or a triethyl ammonium structure.
Specific examples of the quaternary ammonium salt include -N⁺(CH₃)₃Cl⁻, -N⁺(C₂H₅)₃Cl⁻, -N⁺(C₄H₉)₃Cl⁻. Among them, for example, -N⁺CH₃)₃Cl⁻ or -N⁺(C₂H₅)₃Cl⁻ is preferred.

In a case in which the ink composition of the invention includes water, the specific polymer compound preferably has a repeating unit (a4) having a water-soluble group. The number of the water-soluble group in the specific polymer compound is not particularly limited, and may be one or more. The number is selected as appropriate according to, for example, the type of the water-soluble group and the molecular weight. In a case in which two or more water-soluble groups are present, they may be identical or different.

In a case in which the specific polymer compound contains the repeating unit (a4) having a water-soluble group, the specific polymer compound preferably has at least one of the structure represented by the following Formula (AP-C1), (AP-C2), (AP-C3), or (AP-C4). The structure represented by Formula (AP-C1) is particularly preferred:

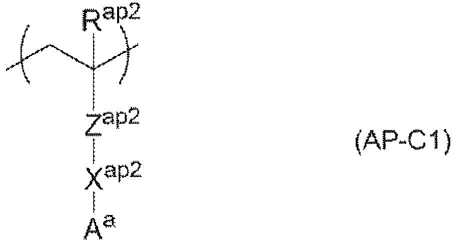

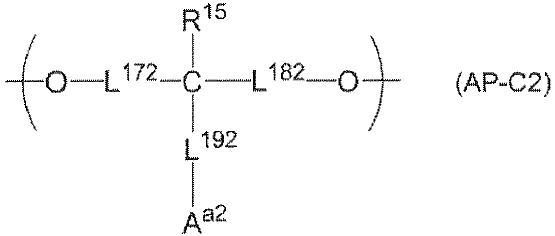

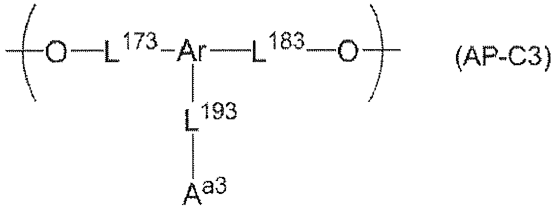

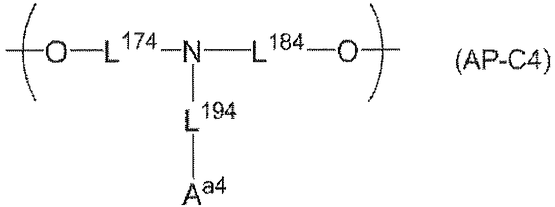

In Formula (AP-C1), R^{ap2} represents a hydrogen atom or a methyl group; Z^{ap2} represents -COO-, -CONR^{ax2}-, or a single bond, and R^{ax2} represents a hydrogen atom or an alkyl group having 1 to 4 carbon atoms; X^{ap2} represents a single bond or a group selected from the group consisting of an alkylene group, an arylene group, and an aralkylene group; A^{a} represents a water-soluble group.

In Formula (AP-C1), R^{ap2} represents a hydrogen atom or a methyl group, and is preferably a methyl group.

In Formula (AP-C1), Z^{ap2} represents -COO-, -CONR^{ax2}-, or a single bond, and is preferably -COO-. R^{ax2} represents a hydrogen atom or an alkyl group having 1 to 4 carbon atoms. The alkyl group having 1 to 4 carbon atoms may be linear or branched. Specific examples thereof include a methyl group, an ethyl group, a propyl group, an isopropyl group, a butyl group, an isobutyl group, a sec-butyl group, and a t-butyl group. R^{ax2} is preferably a hydrogen atom or an alkyl group having 1 to 2 carbon atoms, more specifically, a methyl group or an ethyl group, and is particularly preferably a hydrogen atom. R^{ax2} may have any substituent or no substituent, but preferably has no substituent.

Examples of the substituent which may be contained in R^{ax2} include an aryl group having 6 to 8 carbon atoms, an alkoxy group having 1 to 8 carbon atoms, a hydroxyl group, a carboxyl group, and a halogen atom (for example, F, Cl, Br, or I).

In Formula (AP-C1), X^{ap2} represents a single bond a group selected from the group consisting of an alkylene group, an arylene group, and an aralkylene group, and is preferably an alkylene group having 1 to 20 carbon atoms, an arylene group having 6 to 20 carbon atoms, or an aralkylene group having 7 to 20 carbon atoms. These groups may have any substituent or no substituent. These groups may contain an ether bond, an ester bond, an amide bond, or an urethane bond. In Formula (AP-C1), X^{ap2} is preferably a single bond.

Examples of the substituent which may be contained in X^{ap2} include an aryl group having 6 to 8 carbon atoms, an alkoxy group having 1 to 8 carbon atoms, a hydroxyl group, a carboxyl group, and a halogen atom (for example, F, Cl, Br, or I).

In a case in which X^{ap2} is an alkylene group having 1 to 20 carbon atoms, the alkylene group may be linear, branched, or cyclic. In a case in which X^{ap2} is an alkylene group, the carbon number of the alkylene group is more preferably from 2 to 12, and even more preferably from 2 to 8. Specific examples of the alkylene group represented by X^{ap2} include -CH₂-, -C₂H₄-, -C(CH₃)₂-CH₂-, -CH₂C(CH₃)₂CH₂-, -C₆H₁₂-, -C₄H₇(C₄H₉)C₄H₈-, -C₁₈H₃₆-, a 1,4-trans-cyclohexylene group, -C₂H₄-OCO-C₂H₄-, -C₂H₄-OCO-, -C₂H₄-O-C₅H₁₀-, -CH₂-O-C₅H₉(C₅H₁₁)-, -C₂H₄-CONH-C₂H₄-, -C₄H₈-OCONH-C₆H₁₂-, -CH₂-OCONHC₁₀H₂₀-, and -CH₂CH(OH)CH₂-.

In a case in which X^{ap2} is an arylene group having 6 to 20 carbon atoms, the carbon number of the arylene group is preferably from 6 to 18, more preferably from 6 to 14, and particularly preferably from 6 to 10. Specific examples of the arylene group represented by X^{ap2} include a phenylene group, a biphenylene group, -C₆H₄-CO-C₆H₄-, and a naphthylene group.

In a case in which X^{ap2} is an aralkylene group having 7 to 20 carbon atoms, the carbon number of the aralkylene group is preferably from 7 to 18, more preferably from 7 to 14, and particularly preferably from 7 to 10. Specific examples of the aralkylene group include -C₃H₆-C₆H₄-, -C₂H₄-C₆H₄-C₆H₄-, -CH₂-C₆H₄-C₆H₄-C₂H₄-, and -C₂H₄-OCO-C₆H₄-.

Examples and preferred examples of the water-soluble group represented by A^{a} are the same as those listed for the above-described water-soluble group.

In Formula (AP-C1), R^{ap2} is preferably a hydrogen atom, Z^{ap2} is preferably -COO-, X^{ap2} is preferably a single bond, an alkylene group having 2 to 8 carbon atoms, or an arylene group having 6 to 10 carbon atoms, A^{a} is preferably a carboxyl group, a sulfo group, or a salt of any of them.

In Formulae (AP-C2), (AP-C3), and (AP-C4), A^{a2}, A^{a3}, and A^{a4} each independently represent a water-soluble group, and examples and preferred examples thereof are the same as those listed for the above-described water-soluble group. Among them, a carboxyl group and the salts thereof are particularly preferred.

In Formulae (AP-C2), (AP-C3), and (AP-C4), L¹⁷², L¹⁷³, L¹⁷⁴, L¹⁸², L¹⁸³, L¹⁸⁴, L¹⁹², L¹⁹³, and L¹⁹⁴ each independently represent a single bond or a divalent aliphatic or aromatic hydrocarbon group which may have a substituent (for example, preferably an alkyl group, an aralkyl group, an aryl group, an alkoxy group, or a halogen). The L¹⁷², L¹⁷³, L¹⁷⁴, L¹⁸², L¹⁸³, L¹⁸⁴, L¹⁹², L¹⁹³, and L¹⁹⁴ are each independently preferably an alkylene group having 1 to 20 carbon atoms or an arylene group having 6 to 15 carbon atoms, and more preferably an alkylene group having 1 to 8 carbon atoms. As necessary, the L¹⁷², L¹⁷³, L¹⁷⁴, L¹⁸², L¹⁸³, L¹⁸⁴, L¹⁹², L¹⁹³, and L¹⁹⁴ may contain other functional group which will not react with an isocyanate group, such as a carbonyl group, an ester group, an urethane group, an amide group, an ureide group, or an ether group. Two or three of the R¹⁵, L¹⁷², L¹⁸², and L¹⁹² may be bonded to each other to form a ring.
L¹⁷², L¹⁷³, L¹⁷⁴, L¹⁸², L¹⁸³, L¹⁸⁴, L¹⁹², L¹⁹³, and L¹⁹⁴ may be identical or different.

In Formula (AP-C2), R¹⁵ represents a hydrogen atom, an alkyl group, an aralkyl group, an aryl group, an alkoxy group, or an aryloxy group which may have a substituent (for example, a cyano group, a nitro group, a halogen atom such as -F, -Cl, -Br, or -I, -CONH₂, -COOR¹⁶, -OR¹⁶, -NHCONHR¹⁶, -NHCOOR¹⁶, -NHCOR¹⁶, -OCONHR¹⁶ (wherein R¹⁶ represents an alkyl group having 1 to 10 carbon atoms, or an aralkyl group having 7 to 15 carbon atoms)), and is preferably a hydrogen atom or an alkyl group having 1 to 8 carbon atoms or an aryl group having 6 to 15 carbon atoms.

In Formula (AP-C3), Ar represents a trivalent aromatic hydrocarbon group which may have a substituent. The carbon number of the aromatic hydrocarbon group is preferably from 6 to 15.

In Formulae (AP-C2), (AP-C3), and (AP-C4), in a case in which A^{a2}, A^{a3}, and A^{a4} are carboxyl groups, the diol compound used as the raw material of the repeating unit may be freely selected according to the intended use. Examples of the diol compound include 3,5-dihydroxybenzoic acid, 2,2-bis(hydroxymethyl)propionic acid,
2,2-bis(2-hydroxyethyl)propionic acid, 2,2-bis(3-hydroxypropyl)propionic acid, bis(hydroxymethyl)acetic acid, bis(4-hydroxyphenyl)acetic acid,
2,2-bis(hydroxymethyl)butyric acid, 4,4-bis(4-hydroxyphenyl)pentanoic acid, tartaric acid, N,N-dihydroxyethyl glycine, and N,N-bis(2-hydroxyethyl)-3-carboxy-propionamide.

The structure represented by Formula (AP-C1) may be obtained through the polymerization of the monomer represented by (AP-C-M).

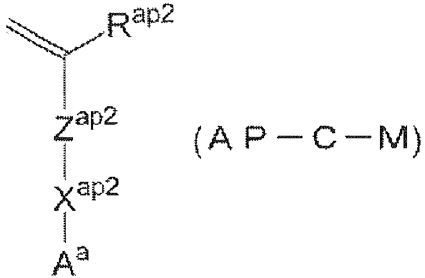

In Formula (AP-C-M), the definitions and preferred examples of R^{ap2}, Z^{ap2}, X^{ap2}, and A^{a} are the same as those in (AP-C1).

Preferred examples of the monomer represented by Formula (AP-C-M) include, but not limited to the following compounds (AP-C-M1) to (AP-C-M27).

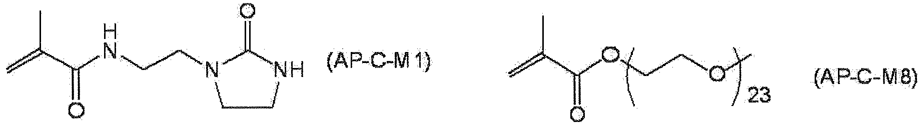

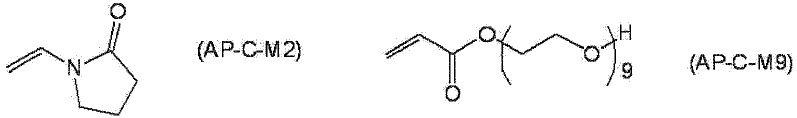

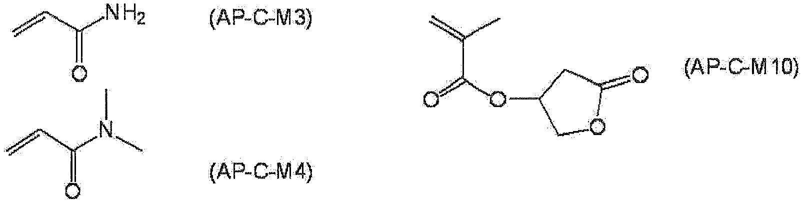

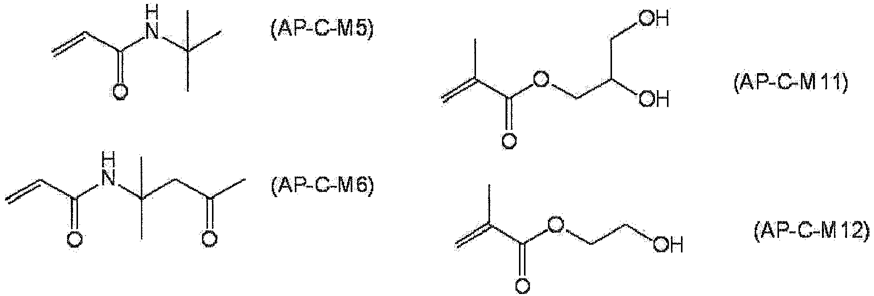

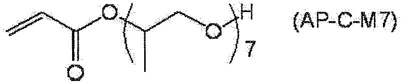

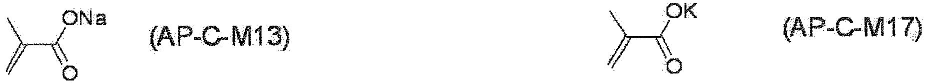

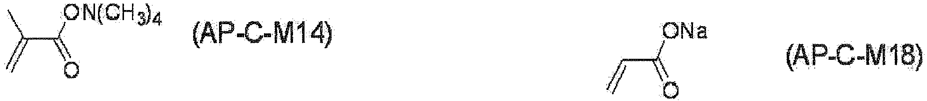

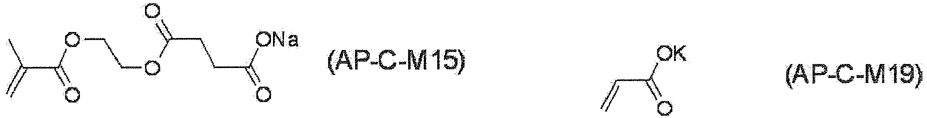

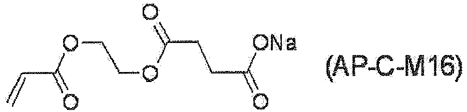

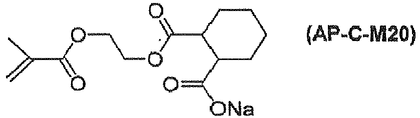

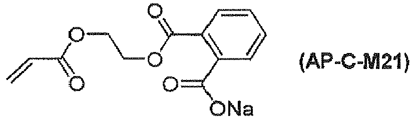

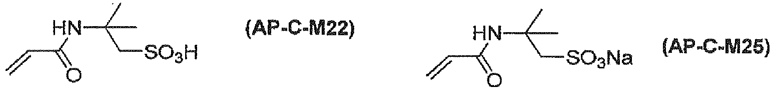

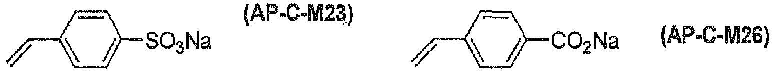

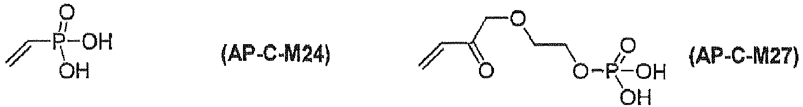

From the viewpoint of jettability of the ink composition to be jetted by an inkjet method, the weight average molecular weight of the specific polymer is preferably from 2,000 to 200,000, more preferably from 7,000 to 100,000, even more preferably from 10,000 to 50,000, and particularly preferably from 10,000 to 40,000.

The weight average molecular weight is measured by gel permeation chromatography (GPC). GPC uses, for example, HLC-8020GPC (manufactured by Tosoh Corporation), wherein the column is TSK GEL SUPER HZM-H, TSK GEL SUPER HZ4000, TSK GEL SUPER HZ200 (manufactured by Tosoh Corporation, 4.6 mm ID x 15 cm), and the eluate is NMP (N-methylpyrrolidone).

Examples of the above-described specific polymer compound of the invention include, but not limited to, the following compounds. The values in the formulae represent the proportion (molar basis) of the repeating units.

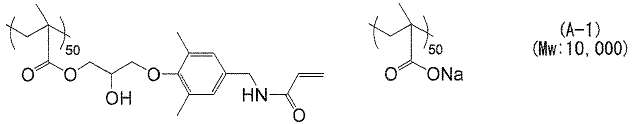

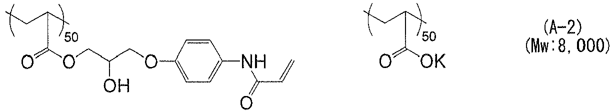

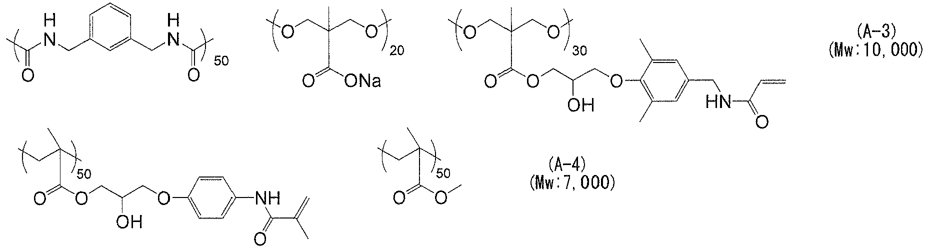

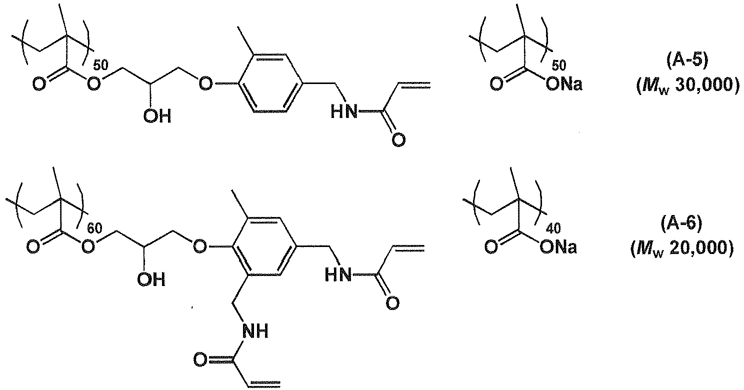

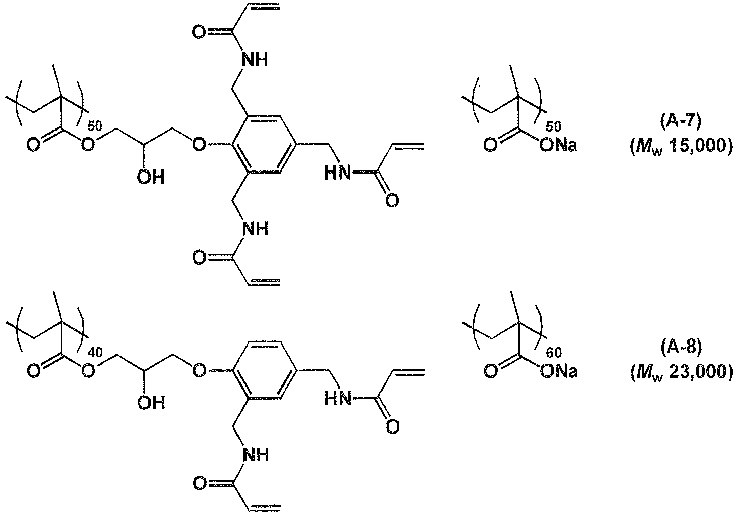

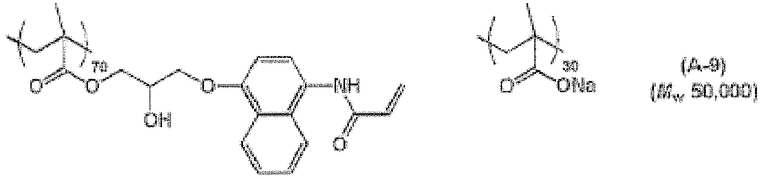

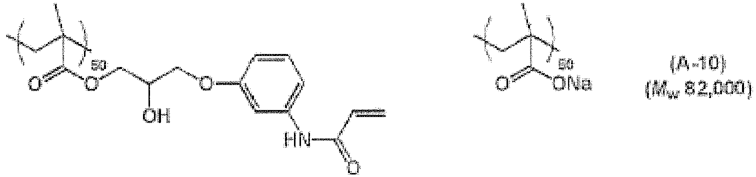

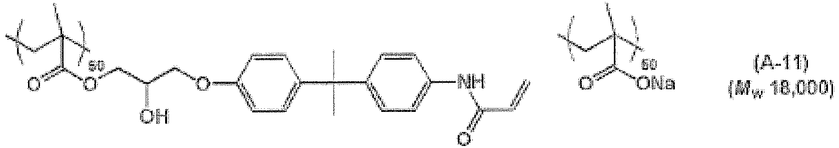

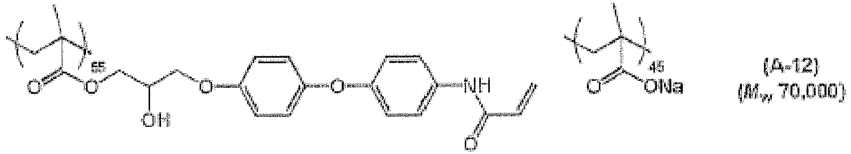

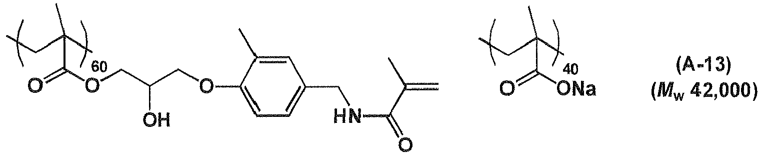

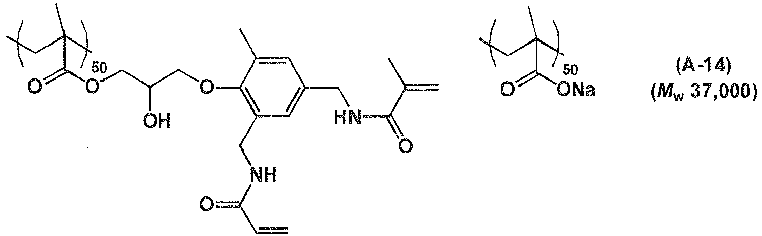

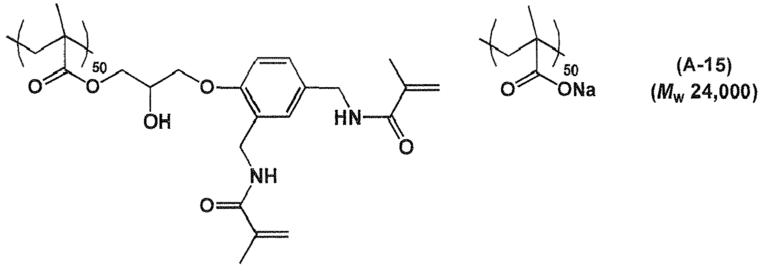

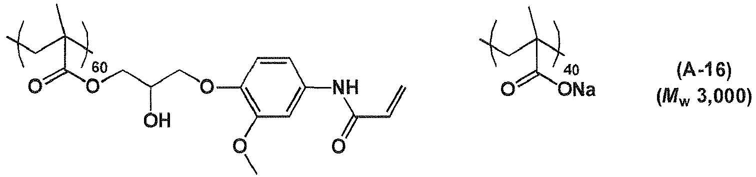

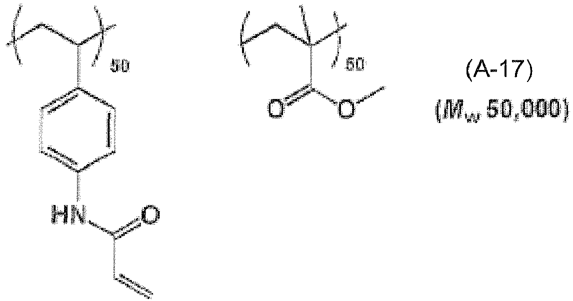

Among the above exemplary compounds, from the viewpoint of water resistance and jettability, (A-1) to (A-3) are preferred.
(A) The specific polymer compound contained in the ink composition of the invention may be used alone or in combination of two or more thereof.
In the invention, the content of (A) the specific polymer compound is from 0.1 to 20% by mass, preferably from 0.5 to 15% by mass, and particularly preferably from 1 to 10% by mass with respect to the total mass of the ink composition. When the content is within this range, good water resistance and jettability are achieved.

The content of the (meth)acrylamide group in the partial structure represented by Formula (I) in (A) the polymer compound having the partial structure represented by Formula (I) in the side chain thereof is preferably from 0.1 mmol/g to 4 mmol/g, more preferably from 0.5 mmol/g to 3.5 mmol/g, and even more preferably from 1 mmol/g to 3 mmol/g in the specific polymer. When the content is within this range, the ink composition including the specific polymer has higher curability, and forms a strong film, so that adhesion to the base material is improved, and solvent resistance and water resistance are improved.
The reaction for adding a (meth)acrylamide compound having an epoxy group to a polymer having a carboxyl group is quantitatively progressed, and thus (meth)acrylamide groups are introduced into the polymer according to the charged amount. Whether the group is actually introduced or not can be confirmed by, for example, ¹H-NMR measurement.

### <(B) Coloring material>

The ink composition of the invention contains (B) a coloring material.
The coloring material which may be used in the invention is not particularly limited, and may be freely selected from known coloring materials such as pigments, water-soluble dyes, and disperse dyes. Among them, the coloring material more preferably contains a pigment, thereby achieving good weather resistance and color reproducibility.

### (Pigment)

The pigment is not particularly limited, and may be freely selected according to the intended use. Examples of the pigment include known organic and inorganic pigments, and resin particles colored with dyes, commercially available pigment dispersions, surface-treated pigments (for example, pigments dispersed in water, a liquid organic compound, or an insoluble resin, and pigments whose surface are treated with a resin or a pigment derivative). Examples of the pigment include those described in "Pigment Dictionary" edited by Seishiro Ito (2000, Asakura Publishing Co., Ltd.), "Organic Pigment Handbook" authored by Isao Hashimoto (2006, Color Office Co., Ltd.), "Industrial Organic Pigments" edited by W. Herbst, K. Hunger (1992, Wiley-VHC), JP-A Nos. 2002-12607, 2002-188025, 2003-26978, 2003-342503, and 2009-235370.

Examples of the organic and inorganic pigments include yellow pigments, red pigments, magenta pigments, blue pigments, cyan pigments, green pigments, orange pigments, violet pigments, brown pigments, black pigments, and white pigments.
Preferred examples of the yellow pigment include monoazo pigments such as C.I. PIGMENT YELLOW 1, 2, 3, 4, 5, 10, 65, 73, 74, 75, 97, 98, 111, 116, 130, 167, and 205; monoazo lake pigments such as 61, 62, 100, 168, 169, 183, 191, 206, 209, and 212; disazo pigments such as 12, 13, 14, 16, 17, 55, 63, 77, 81, 83, 106, 124, 126, 127, 152, 155, 170, 172, 174, 176, 214, and 219; anthraquinone pigments such as 24, 99, 108, 193, and 199; monoazo pyrazolone pigments such as 60; condensed azo pigments such as 93, 95, 128, and 166; isoindoline pigments such as 109, 110, 139, 173, and 185; benzimidazolone pigments such as 120, 151, 154, 175, 180, 181, and 194; azomethine metal complex pigments such as 117, 129, 150, and 153; quinophthalone pigments such as 138; and quinoxaline pigments such as 213.

Preferred examples of the red or magenta pigment include monoazo lake pigments such as C.I. PIGMENT RED 193; disazo pigments such as 38; naphthol AS pigments such as 2, 5, 8, 9, 10, 11, 12, 14, 15, 16, 17, 18, 22, 23, 31, 32, 112, 114, 146, 147, 150, 170, 184, 187, 188, 210, 213, 238, 245, 253, 256, 258, 266, 268, and 269; β-naphthol pigments such as 3, 4, and 6; β-naphthol lake pigments such as 49, 53, and 68; naphthol AS lake pigments such as 237, 239, and 247; pyrazolone pigments such as 41; BONA lake pigments such as 48, 52, 57, 58, 63, 64:1, and 200; xanthene lake pigments such as 81:1, 169, and 172; thioindigo pigments such as 88, 181, and 279; perylene pigments such as 123, 149, 178, 179, 190, and 224; condensed azo pigments such as 144, 166, 214, 220, 221, 242, and 262; anthraquinone pigments such as 168, 177, 182, 226, and 263; anthraquinone lake pigments such as 83; benzimidazolone pigments such as 171, 175, 176, 185, and 208; quinacridone pigments such as 122, 202 (including mixtures with C.I. PIGMENT VIOLET 19), 207, and 209; diketopyrrolopyrrole pigments such as 254, 255, 264, 270, and 272; and azomethine metal complex pigments such as 257 and 271.

Preferred examples of the blue or cyan pigment include naphthol AS pigments such as C.I. PIGMENT BLUE 25 and 26; phthalocyanine pigments such as 15, 15:1, 15:2, 15:3, 15:4, 15:6, 16, 17:1, 75, and 79; vat lake pigments such as 1, 24:1, 56, 61, and 62; anthraquinone pigments such as 60; indigo pigments such as 63; and dioxazine pigments such as 80.
Preferred examples of the green pigment include vat lake pigments such as C.I. PIGMENT GREEN 1 and 4; phthalocyanine pigments such as 7 and 36; and azomethine metal complex pigments such as 8.
Preferred examples of the orange pigment include monoazo pigments such as C.I. PIGMENT ORANGE 1; β-naphthol pigments such as 2, 3, and 5; naphthol AS pigments such as 4, 24, 38, and 74; pyrazolone pigments such as 13 and 34; benzimidazolone pigments such as 36, 60, 62, 64, and 72; disazo pigments such as 15 and 16; β-naphthol lake pigments such as 17 and 46; naphthalenesulfonic acid lake pigments such as 19; perinone pigments such as 43; quinacridone pigments such as 48 and 49; anthraquinone pigments such as 51; isoindolinone pigments such as 61; isoindoline pigments such as 66; azomethine metal complex pigments such as 68; and diketopyrrolopyrrole pigments such as 71, 73, and 81.

Preferred examples of the brown pigment include BONA lake pigments such as C.I. PIGMENT BROWN 5; condensed azo pigments such as 23, 41, and 42; and benzimidazolone pigments such as 25 and 32.
Preferred examples of the violet pigment include vat lake pigments such as C.I. PIGMENT VIOLET 1, 2, 3, and 27; naphthol AS pigments such as 13, 17, 25, and 50; anthraquinone lake pigments such as 5:1; quinacridone pigments such as 19; dioxazine pigments such as 23 and 37; perylene pigments such as 29; benzimidazolone pigments such as 32; and thioindigo pigments such as 38.
Preferred examples of the black pigment include indazin pigments such as C.I. PIGMENT BLACK 1; carbon black corresponding to 7; graphite corresponding to 10; magnetite corresponding to 11, anthraquinone pigment such as 20; and perylene pigments such as 31 and 32.
Preferred examples of the white pigment include zinc oxide which is C.I. PIGMENT WHITE 4; titanium oxide corresponding to 6; zinc sulfide corresponding to 7; zirconium oxide (zirconium white) corresponding to 12; calcium carbonate corresponding to 18; aluminum oxide-silicon oxide (kaolin clay) corresponding to 19; barium sulfate corresponding to 21 or 22; aluminum hydroxide (alumina white) corresponding to 23; silicon oxide corresponding to 27; and calcium silicate corresponding to 28.
The inorganic particles composing the white pigment may be single component particles or composite particles containing, for example, an oxide of silicon, aluminum, zirconium, or titanium, an organometallic compound, or an organic compound.
Among them, the titanium oxide is preferred, because it has a smaller specific gravity, a higher refractive index, higher hiding power and coloring power, and higher resistance against acids, alkalis, and other environments, in comparison with other white pigments.
The titanium oxide may be used in combination with other white pigment (which may be other than the above-described white pigments).

The pigment, dispersant, and medium, and the conditions of dispersion and filtration are preferably selected such that the volume average particle diameter of the pigment particles is preferably from 0.005 to 0.5 µm, more preferably from 0.01 to 0.45 µm, and even more preferably from 0.015 to 0.4 µm.
In the invention, the average particle diameter and particle diameter distribution of the particles are determined by measuring the volume average particle diameter by a dynamic light scattering method using a commercially available particle size measuring apparatus such as NANOTRAC particle size distribution analyzerUPA-EX150 (manufactured by Nikkiso Co., Ltd.).

### (Water-soluble dye)

In the next place, the dyes suitable as (B) the coloring material in the invention are described below.
The dye may be appropriately selected from known compounds (dyes). Specific examples of the dye include the compounds described in JP-A No. 2002-114930, paragraphs [0023] to [0089], and JP-A No. 2008-13646, paragraphs [0136] to [0140]. These dyes may be used in the invention.

### (Disperse dye)

In the invention, (B) the coloring material may be a disperse dye.
Specific preferred examples of the disperse dye include C.I. DISPERSE YELLOW 5, 42, 54, 64, 79, 82, 83, 93, 99, 100, 119, 122, 124, 126, 160, 184:1, 186, 198, 199, 201, 204, 224, and 237; C.I. DISPERSE ORANGE 13, 29, 31:1, 33, 49, 54, 55, 66, 73, 118, 119, and 163; C.I. DISPERSE RED 54, 60, 72, 73, 86, 88, 91, 92, 93, 111, 126,127, 134, 135, 143, 145, 152, 153, 154, 159, 164, 167:1, 177, 181, 204, 206, 207, 221, 239, 240, 258, 277, 278, 283, 311, 323, 343, 348, 356, and 362; C.I. DISPERSE VIOLET 33; C.I. DISPERSE BLUE 56, 60, 73, 87, 113, 128, 143, 148, 154, 158, 165, 165:1, 165:2, 176, 183, 185, 197, 198, 201, 214, 224, 225, 257, 266, 267, 287, 354, 358, 365, and 368; and C.I. DISPERSE GREEN 6:1, and 9.

The coloring material contained in the ink composition of the invention may be used alone or in combination of two or more thereof.
The content of (B) the coloring material in the ink composition is appropriately selected according to the conditions such as the physical properties of the coloring material (specific gravity, coloring power, color), and the number of colors of the ink compositions to be combined to make a printed material. The content is preferably from 0.1 to 30% by mass, and more preferably from 0.5 to 20% by mass, with respect to the total mass of the ink composition.

### (Dispersant)

In a case in which a pigment is used as a coloring material, a pigment dispersant may be used as necessary when preparing the pigment particles. Examples of the pigment dispersant include activators such as higher fatty acid salts, alkyl sulfates, alkyl ester sulfate salts, alkyl sulfonates, sulfosuccinates, naphthalene sulfonates, alkyl phosphates, polyoxyalkylene alkyl ether phosphates, polyoxyalkylene alkyl phenyl ethers, polyoxyethylene polyoxypropylene glycols, glycerol esters, sorbitan esters, polyoxyethylene fatty acid amides, and amine oxides; and block copolymers, random copolymers, and salts thereof composed of two or more monomers selected from styrene, styrene derivatives, vinylnaphthalene derivatives, acrylic acid, acrylic acid derivatives, maleic acid, maleic acid derivatives, itaconic acid, itaconic acid derivatives, fumaric acid, and fumaric acid derivatives.

The ink composition of the invention may include a self dispersible pigment. The self-dispersible pigment referred herein means a pigment which is dispersible without a dispersant, and is particularly preferably pigment particles having polar groups on the surface thereof.

The pigment particles having polar groups on the surface thereof referred herein mean a pigment modified with polar groups directly on the surface of the pigment particles, or an organic substance having an organic pigment structure to which a polar group is bonded directly or via a joint (hereinafter referred to as a pigment derivative).
Examples of the polar group include a sulfonic acid group, a carboxylic acid group, a phosphoric acid group, a boric acid group, and a hydroxyl group. Among them, a sulfonic acid group and a carboxylic acid group are preferred, and a sulfonic acid group is more preferred.

Examples of the method for obtaining the pigment particles having polar groups on the surface thereof include the methods described in WO97/48769, JP-A Nos. 10-110129, 11-246807, 11-57458, 11-189739, 11-323232, and 2000-265094, in which the surface of pigment particles is oxidized with an appropriate oxidant, thereby introducing a polar group such as a sulfonic acid group or its salt to at least a portion of the pigment surface. Specifically, carbon black is oxidized with concentrated nitric acid, or a color pigment is oxidized with sulfamic acid, a sulfonated pyridine salt, or an amidosulfuric acid in sulfolane or N-methyl-2-pyrrolidone. If some particles are excessively oxidized to become water-soluble through the reaction, they are removed and the residue is purified, thereby obtaining a pigment dispersion. In a case in which a sulfonic acid group is introduced to the surface through oxidation, the acidic group may be neutralized with a basic compound as necessary.

Other examples of the method for obtaining pigment particles having polar groups on the surface thereof include the methods described in JP-A Nos. 11-49974, 2000-273383, and 2000-303014, in which a pigment derivative is adsorbed to the pigment particle surface through milling or other treatment, and the methods described in Japanese Patent Application Nos. 2000-377068, 2001-1495, and 2001-234966, in which a pigment is dissolved together with a pigment derivative in a solvent, and crystallized in a poor solvent. Using these methods, the pigment particles having polar groups on the surface thereof is easily obtained.

The polar group on the pigment surface may be in a free or salt state, and may have a counter ion. Examples of the counter ion include inorganic ions (lithium, sodium, potassium, magnesium, calcium, aluminum, nickel, and ammonium), and organic ions (triethyl ammonium, diethyl ammonium, pyridinium, and triethanol ammonium). Among them, monovalent counter ions are preferred.

Examples of the method for dispersing the pigment include various dispersers such as a ball mill, a sand mill, an attritor, a roll mill, an agitator, a Henschel mixer, a colloid mill, an ultrasonic homogenizer, a pearl mill, a wet jet mill, and a paint shaker. It is also preferred that a centrifugal separator and a filter be used for the purpose of removing coarse particles from the pigment dispersion.

The content of the dispersant in the ink composition preferably satisfies 0.01 ≤ D/P ≤ 2.0, more preferably 0.03 ≤ D/P ≤ 1.5, and even more preferably 0.05 ≤ D/P ≤ 0.6, wherein P is the mass of the pigment in the ink composition, D is the mass of the polymeric dispersant in the ink composition, and D/P is the mass ratio between them.

When dispersing the pigment, in addition to the dispersant, dispersion aids which are generally called synergists (for example, SOLSPERSE 5000, 12000, and 22000 commercially available from The Lubrizol Corporation, and EFKA6745 commercially available from BASF Japan), various surfactants, and anti-foaming agents are preferably added thereby improving the dispersibility and wettability of the pigment.

In the invention, dispersion of a pigment is preferably carried out by mixing a pigment and a dispersant, and then dispersing the mixture in a polar organic solvent, or mixing a polar organic solvent and a dispersant, and then dispersing a pigment into the mixture. The dispersion operation may use various dispersers such as a ball mill, a bead mill, a sand mill, a salt mill, an attritor, a roll mill, an agitator, a Henschel mixer, a colloid mill, an ultrasonic homogenizer, a pearl mill, a wet jet mill, or a paint shaker. Among them, a bead mill disperser is preferred because it achieves good dispersibility.
The beads used for bead mill dispersion preferably have a volume average diameter of 0.01 to 3.0 mm, more preferably 0.05 to 1.5 mm, and even more preferably 0.1 to 1.0 mm, thereby obtaining a pigment dispersion having high stability.

### <Other additives>

The ink composition of the invention may further include, in addition to the specific polymer compound and a coloring material which are essential components, known additives without impairing the effect of the invention. The additives which may be included in the ink composition are further described below.

### <(C) Organic solvent>

According to a preferred embodiment, the ink composition of the invention further includes (C) an organic solvent according to the intended use.
In a case in which the ink composition of the invention includes water, the organic solvent is preferably water-soluble. The water-soluble organic solvent referred herein means an organic solvent having a solubility of 10% by mass or more in water at 25°C.
Examples of the water-soluble organic solvent which may be used in the invention include the followings:

alcohols (for example, methanol, ethanol, propanol, isopropanol, butanol, isobutanol, secondary butanol, t-butanol, pentanol, hexanol, cyclohexanol, and benzyl alcohol); polyalcohols (for example, ethylene glycol, diethylene glycol, triethylene glycol, polyethylene glycol, propylene glycol, dipropylene glycol, polypropylene glycol, butylene glycol, hexanediol, pentanediol, glycerol, hexanetriol, thiodiglycol, and 2-methylpropanediol); polyalcohol ethers (for example, ethylene glycol monomethyl ether, ethylene glycol monoethyl ether, ethylene glycol monobutyl ether, diethylene glycol monoethyl ether, diethylene glycol monomethyl ether, diethylene glycol monobutyl ether, propylene glycol monomethyl ether, propylene glycol monobutyl ether, tripropylene glycol monomethyl ether, dipropylene glycol monomethyl ether, dipropylene glycol dimethyl ether, ethylene glycol monomethyl ether acetate, triethylene glycol monomethyl ether, triethylene glycol monoethyl ether, triethylene glycol monobutyl ether, ethylene glycol monophenyl ether, and propylene glycol monophenyl ether; amines (for example, ethanolamine, diethanolamine, triethanolamine, N-methyldiethanolamine, N-ethyl diethanolamine, morpholine, N-ethylmorpholine, ethylenediamine, diethylenediamine, triethylenetetramine, tetraethylenepentamine, polyethyleneimine, pentamethyldiethylenetriamine, and tetramethylpropylenediamine); amides (for example, formamide, N,N-dimethylformamide, and N,N-dimethylacetamide); heterocycles (for example, 2-pyrrolidone, N-methyl-2-pyrrolidone, cyclohexyl pyrrolidone, 2-oxazolidone,
1,3-dimethyl-2-imidazolidinone, γ-butyrolactone, and propionic carbonate); sulfoxides (for example, dimethyl sulfoxide); sulfones (for example, sulfolane); and others (urea, acetonitrile, and acetone).

Preferred examples of the water-soluble organic solvent include polyalcohol ethers and heterocycles. They are preferably used in combination. Among polyalcohol ethers, so-called glycol ethers are preferred, and specifically, tripropylene glycol monomethyl ether, dipropylene glycol monomethyl ether, and dipropylene glycol dimethyl ether are preferred. Among heterocycles, 2-pyrrolidone and γ-butyrolactone are preferred, and 2-pyrrolidone is particularly preferred. In particular, a solvent having a high boiling point is preferred thereby improving jettability. The boiling point is more preferably 120°C or higher, and even more preferably 150°C or higher under normal pressure.

The organic solvent may be used alone or in combination of two or more thereof. The content of the organic solvent in the ink composition may be from 5 to 95% by mass, preferably from 30 to 95% by mass, and particularly preferably from 40 to 90% by mass in total.

### <(D) Water>

According to a preferred embodiment, the ink composition of the invention includes (D) water.
The water is preferably ion-exchange water or distilled water containing no impurity.
The content of water in the ink composition of the invention is preferably from 5 to 95% by mass, more preferably from 30 to 95% by mass, and particularly preferably from 40 to 90% by mass.

According to a preferred embodiment, the ink composition of the invention includes (C) the organic solvent and (D) the water in addition to (A) the specific polymer compound and (B) the coloring material.
In a case in which the ink composition contains (C) the organic solvent and (D) water in addition to (A) the specific polymer compound and (B) the coloring material, the contents of these components in the ink composition are as follows: preferably, (A) the specific polymer compound is from 1 to 50% by mass, (B) the coloring material is from 0.1 to 30% by mass, the sum of (C) the organic solvent and (D) water is from 20 to 98.9% by mass; more preferably, (A) the specific polymer compound is from 2 to 40% by mass, (B) the coloring material is from 0.5 to 25% by mass, and the sum of (C) the organic solvent and (D) water is from 35 to 97.5% by mass; particularly preferably, (A) the specific polymer compound is from 3 to 30% by mass, (B) the coloring material is from 0.5 to 20% by mass, and the sum of (C) the organic solvent and (D) water is from 50 to 96.5% by mass.

In a case in which the ink composition of the invention contains (C) the organic solvent and (D) water, the proportion (mass basis) of (C) the organic solvent to (D) the water is preferably from 1:0.1 to 1:20, more preferably from 1:0.2 to 1:10, even more preferably from 1:0.5 to 1:5, and most preferably from 1:1 to 1:5.

### (Surfactant)

The ink composition of the invention may include a surfactant. Preferred examples of the surfactant include anionic surfactants such as dialkylsulfosuccinic acid salts, alkyl naphthalene sulfonates, and fatty acid salts; nonionic surfactants such as polyoxyethylene alkyl ethers, polyoxyethylene alkyl aryl ethers, acetylene glycols, and polyoxyethylene polyoxypropylene block copolymers; and cationic surfactants such as alkylamine salts and quaternary ammonium salts. Among them, anionic surfactants and nonionic surfactants are particularly preferred.

In the invention, a polymer surfactant also may be used. Preferred examples of the polymer surfactant include the following water-soluble resins from the viewpoint of jetting stability. Preferred examples of the water-soluble resin include a styrene-acrylic acid-alkyl acrylate ester copolymer, a styrene-acrylic acid copolymer, a styrene-maleic acid-alkyl acrylate ester copolymer, a styrene-maleic acid copolymer, a styrene-methacrylic acid-alkyl acrylate ester copolymer, a styrene-methacrylic acid copolymer, a styrene-maleic acid half ester copolymer, a vinylnaphthalene-acrylic acid copolymer, and a vinylnaphthalene-maleic acid copolymer.

### (Latex)

The ink composition of the invention may include a latex. Examples of the latex which may be used in the invention include a styrene-butadiene copolymer, polystyrene, an acrylonitrile-butadiene copolymer, an acrylate copolymer, polyurethane, a silicon-acryl copolymer, and acryl-modified fluorine resins. The latex may be a dispersion of polymer particles dispersed using an emulsifying agent, or a so-called soap free latex dispersed using no emulsifying agent. The emulsifying agent is often a surfactant, and is preferably a polymer having a water-soluble group such as a sulfonic acid group or a carboxylic acid group (for example, a polymer to which a solubilizing group is grafted, a polymer obtained from a monomer having a solubilizing group and a monomer having an insoluble portion).

The volume average particle diameter of the polymer particles contained in the latex used in the ink composition of the invention is preferably from 10 nm to 300 nm, and more preferably from 10 nm to 100 nm. The average particle diameter of the polymer particles in the latex can be determined by a commercially available particle size meter based on a light scattering method, an electrophoresis method, or a laser Doppler method.

In a case in which the ink composition of the invention includes a latex, the solid content of the latex in the ink composition is preferably from 0.1 % by mass to 20% by mass, and particularly preferably from 0.5% by mass to 10% by mass with respect to the total amount of the ink composition.

### (Aqueous polymer)

The ink composition of the invention may includes an aqueous polymer whose structure is different from that of (A) the specific polymer compound.
Preferred examples of the aqueous polymer whose structure is different from that of the specific polymer compound include natural polymers. Specific examples of the natural polymer include proteins such as glue, gelatin, casein, or albumin; natural rubbers such as gum arabic, or tragacanth rubber; glucosides such as saponin; alginic acid derivatives such as alginic acid and propylene glycol alginate, triethanolamine alginate, or ammonium alginate; and cellulose derivatives such as methyl cellulose, carboxymethyl cellulose, hydroxyethyl cellulose, or ethyl hydroxyl cellulose.

Other preferred examples of the aqueous polymer include synthetic polymers. Examples of the synthetic polymer include polyvinyl alcohols, polyvinyl pyrrolidones, acrylic resins such as polyacrylic acid, an acrylic acid-acrylonitrile copolymer, a potassium acrylate-acrylonitrile copolymer, a vinyl acetate-acrylate copolymer, or an acrylic acid-acrylate copolymer, styrene acrylic acid resins such as a styrene-acrylic acid copolymer, a styrene-methacrylic acid copolymer, a styrene-methacrylic acid-acrylate copolymer, a styrene-α-methylstyrene-acrylic acid copolymer, or a styrene-α-methylstyrene-acrylic acid-acrylate copolymer, a styrene-maleic acid copolymer, a styrene-maleic acid anhydride copolymer, a vinylnaphthalene-acrylic acid copolymer, a vinylnaphthalene-maleic acid copolymer, and vinyl acetate copolymers such as a vinyl acetate-ethylene copolymer, a vinyl acetate-fatty acid vinyl ethylene copolymer, a vinyl acetate-maleate copolymer, a vinyl acetate-crotonic acid copolymer, and a vinyl acetate-acrylic acid copolymer, and salts thereof. Among them, polyvinyl pyrrolidones are particularly preferred.

The weight average molecular weight of the water-soluble polymer useful herein whose structure is different from that of the specific polymer compound is preferably from 1,000 to 200,000, and even more preferably from 3,000 to 20,000.

The content of the water-soluble polymer whose structure is different from that of the specific polymer compound is preferably from 10% by mass to 1,000% by mass, and more preferably from 50% by mass to 200% by mass with respect to the dissolved pigment.

### (Polymerization initiator)

The ink composition of the invention preferably includes a polymerization initiator. In a case in which the ink composition includes water, the polymerization initiator is preferably water-soluble, the water solubility is preferably 0.5% by mass or more, preferably 1% by mass or more, and particularly preferably 3% by mass or more in distilled water at 25°C. The water-soluble initiator is preferably 1-[4-(2-hydroxy ethoxy)-phenyl]-2-hydroxy-2-methyl-1-propane-1-one) (IRGACURE-2959, manufactured by BASF).
It is also preferred that the polymerization initiator be selected from the group consisting of α-aminoketones and acyl phosphine oxides.

Examples of the compound classified into α-aminoketones include 2-methyl-1-phenyl-2-morpholino propane-1-one, 2-methyl-1-[4-(hexyl)phenyl]-2-morpholinopropane-1-one, and 2-ethyl-2-dimethylamino-1-(4-morpholinophenyl)-butanone-1. In addition, commercial products such as IRGACURE series manufactured by BASF, such as IRGACURE 907, IRGACURE 369, and IRGACURE 379 are also classified into α-aminoketones, and useful in the invention.

Examples of the compound classified into acylphosphine oxides include [2,4,6-trimethylbenzoyl-diphenyl-phosphine oxide], which is commercially available under the trade name of DAROCUR TPO (manufactured by BASF Japan), and [bis(2,4,6-trimethylbenzoyl)-phenylphosphine oxide], which is available under the trade name of IRGACURE 819 (manufactured by BASF Japan).

In a case in which the ink composition of the invention includes a polymerization initiator, the polymerization initiator is preferably any of the above-described acylphosphine oxides, but may be other polymerization initiator as long as it will not impair the effect of the invention.
The acylphosphine oxide may be used in combination with other polymerization initiator, which is preferably a water-soluble polymerization initiator. The water solubility is preferably 0.5% by mass or more, preferably 1% by mass or more, and particularly preferably 3% by mass or more in distilled water at 25°C.

Examples of the other known polymerization initiator include camphor quinone, benzophenone, benzophenone derivative, acetophenone, acetophenone derivatives such as α-hydroxycycloalkylphenyl ketone, 2-hydroxy-2-methyl-1-phenyl-propanone, and dialkoxyacetophenones, α-hydroxy- or 4-aroyl-1,3-dioxolanes, benzoin alkyl ethers, and benzyl ketals such as benzyl dimethylketal, phenyl glyoxalate and the derivatives thereof, phenyl glyoxalate dimer, peresters such as benzophenone tetracarboxylic acid peresters (for example, those described in EP 1126,541), halomethyltriazines such as 2-[2-(4-methoxy-phenyl)-vinyl]-4,6-bis-trichloromethyl[1,3,5]triazine, 2-(4-methoxy-phenyl)-4,6-bis-trichloromethyl[1,3,5]triazine, 2-(3,4-dimethoxy-phenyl)-4,6-bis-trichloromethyl[1,3,5]triazine, and 2-methyl-4,6-bis-trichloromethyl[1,3,5]triazine, hexaaryl bisimidazole/co-initiator system, such as ortho-chlorohexaphenyl-bisimidazole combined with 2-mercaptobenzothiazole; ferrocenium compounds or titanocenes such as dicyclopentadienyl-bis(2,6-difluoro-3-pyrrolo-phenyl)titanium; and mixtures with an O-acyloxime ester compound such as those described in GB 2,339,571. The co-initiator may be a boric acid compound.

The content of the polymerization initiator in the ink composition of the invention is preferably from 0 to 10 parts by mass, more preferably 0 to 5 parts by mass, and even more preferably from 0 to 3 parts by mass with respect to 100 parts by mass of the ink composition. The content of the polymerization initiator herein means the total content of the polymerization initiator.

### (Sensitizing dye)

In the invention, known sensitizing dyes may be used. Examples of the known sensitizing dye useful herein include benzophenone and thioxanthone. Specifically, preferred examples include isopropylthioxanthone, anthraquinone, 3-acylcoumarin derivative, terphenyl, styrylketone, 3-(aroylmethylene)thiazoline, camphor quinone, eosin, rhodamine, and erythrosine.

### (Polymerizable compound)

The ink composition of the invention may include a polymerizable compound other than the specific polymer compound. The polymerizable compound is not particularly limited as long as it has at least one radically polymerizable ethylenically unsaturated bond in one molecule thereof, and its chemical form may be, for example, a monomer, an oligomer, or a polymer. The specific polymerizable compound may be used alone, or in combination of two or more thereof at any ratio thereby improving the intended properties

The polymerizable compound used in the invention is dissolved in distilled water at room temperature at a concentration of at least 2% by mass, and preferably 15% by mass or more. It is particularly preferred that the polymerizable compound is uniformly miscible with water at any ratio.

Examples of the polymerizable compound include unsaturated carboxylic acids such as acrylic acid, methacrylic acid, itaconic acid, crotonic acid, isocrotonic acid, and maleic acid, esters thereof, the salts thereof, anhydrides having an ethylenically unsaturated group, acrylonitrile, styrene, various unsaturated polyesters, unsaturated polyethers, unsaturated polyamides, unsaturated urethane, vinyl ether, and allyl ether. Among them, acrylic acid, methacrylic acid, and esters and salts thereof are preferred.

The polymerizable compound useful in the invention preferably has a poly(ethyleneoxy) chain, a poly(propyleneoxy) chain, or an ionic group (for example, a carboxyl group or a sulfo group) thereby achieving water solubility. In a case in which the polymerizable compound has a poly(ethyleneoxy) chain or a poly(propyleneoxy) chain, the number of the ethyleneoxy or propyleneoxy unit is preferably from 1 to 10, and more preferably from 1 to 5.

The ink composition according to the invention may includes, in addition to the above-described components, known various additives such as a viscosity regulator, a surface tension regulator, a resistivity regulator, a film forming agent, a dispersant, a surfactant, an ultraviolet absorber, an antioxidant, an anti-fading agent, a fungicide, a rust preventive, a solid wetting agent, or silica fine particles according to the intended purpose such as improvement of jetting stability, suitability for a printer head or ink cartridge, storage stability, image storage stability, and other performance. Examples of the additive include oil fine particles such as those of liquid paraffin, dioctyl phthalate, tricresyl phosphate, or silicone oil, ultraviolet absorbers described in JP-A Nos. 57-74193, 57-87988, and 62-261476, anti-fading agents described in JP-A Nos. 57-74192, 57-87989, 60-72785, 61-146591, 1-95091, and 3-13376, fluorescent brightening agents described in JP-A Nos. 59-42993, 59-52689, 62-280069, 61-242871, and 4-219266, and pH controlling agents such as sulfuric acid, phosphoric acid, citric acid, sodium hydroxide, potassium hydroxide, and potassium carbonate.

### <Preparation method for ink composition>

The method for preparing the ink composition according to the invention is not particularly limited. The ink composition may be prepared by stirring, mixing and dispersing the components in a vessel-driven medium mill such as a ball mill, a centrifugation mill, or a planetary ball mill, a high speed rotation mill such as a sand mill, a medium stirring mill such as a stirring tank mill, or a simple dispersing apparatus such as a disperser. These components may be added in any order. In order to obtain more finely dispersed particles, a dispersion apparatus such as a bead mill or a high pressure injection mill may be used. According to the type of the pigment or polymeric dispersant, an anionic resin may be used during premixing before dispersion of the pigment.

The surface tension of the ink composition of the invention is preferably from 20 to 40 mN/m at 25°C. The surface tension is measured at 25°C using AUTOMATIC SURFACE TENSIOMETER CBVP-Z (manufactured by Kyowa Interface Science Co., Ltd.). The viscosity is preferably from 1 to 40 mPa·s, and more preferably from 3 to 30 mPa·s. The viscosity of the ink composition is measured at 25°C using VISCOMETER TV-22 (manufactured by TOKI SANGYO Co., Ltd.).

### «Image forming method»

The image forming method of the invention includes an ink application step of applying the ink composition to a recording medium, and an irradiation step of irradiating the applied ink composition with an active energy ray. Through these steps, an image is formed by the ink composition deposited on the recording medium.

### <Ink application step>

The ink application step in the image forming method of the invention is further described below. The ink application step in the invention is not particularly limited as long as the ink composition is applied to a recording medium.

In the image forming method of the invention, the ink application step is preferably carried out using an inkjet method. The inkjet recording apparatus used in the invention is not particularly limited, and may be freely selected from known inkjet recording apparatus which achieves the intended resolution. More specifically, known inkjet recording apparatus such as commercial products achieves the application of the ink composition to a recording medium according to the image forming method of the invention.

Examples of the inkjet recording apparatus useful in the invention include an apparatus having an ink supply system, a temperature sensor, and a heating means.
The ink supply system is composed of, for example, a main tank containing the ink composition of the invention, a supply tube, an ink supply tank directly connected to the inkjet head, a filter, and a piezo system inkjet head. The piezo system inkjet head jets ink droplets of multiple sizes preferably from 1 to 100 pl, more preferably 8 to 30 pl with a resolution of preferably from 320 x 320 to 4,000 x 4,000 dpi, more preferably 400 x 400 to 1,600 x 1,600 dpi, and even more preferably 720 x 720 dpi. The dpi referred herein means the dot number per 2.54 cm.

The ink composition of the invention preferably has a constant temperature during jetting. Therefore, the inkjet recording apparatus preferably includes a means for stabilizing the ink composition temperature. The parts to be controlled to have a constant temperature include all the tubes and members from the ink tank (the intermediate tank, if any) to the nozzle jetting face. More specifically, the section from the ink supply tank to the inkjet head unit may be insulated and heated.
The method for temperature control is not particularly limited. For example, it is preferred that plural temperature sensors be installed on respective tubes, thereby controlling heating according to the flow rate of the ink composition and the environmental temperature. The temperature sensor may be installed near the ink supply tank and the inkjet head nozzle. The head unit to be heated is preferably thermally blocked or insulated, thereby protecting the main body of the apparatus from the influence of the outside air temperature. In order to reduce the time for starting up the printer, or reduce the loss of thermal energy, it is preferred that the head unit be thermally insulated from other units, and the heat capacity of the entire heating unit be reduced.

Using the above-described inkjet recording apparatus, the jetting of the ink composition is preferably carried out after heating the ink composition to have a temperature of preferably from 25 to 80°C, more preferably 25 to 50°C, and decreasing the viscosity of the ink composition to preferably from 3 to 15 mPa·s, and more preferably from 3 to 13 mPa·s.
In particular, the ink composition of the invention preferably has a viscosity of 50 mPa·s or less at 25°C, thereby achieving good jetting. Using this method, high jetting stability is achieved.

The temperature of the ink composition during jetting is preferably constant. In the invention, the temperature of the ink composition is preferably ±5°C of the set temperature, more preferably ±2°C of the set temperature, and even more preferably ±1 °C of the set temperature.

In the invention, the recording medium is not particularly limited, and may be a known recording medium such as a support or a recording material. Examples of the recording medium include paper, paper laminated with a plastic (for example, polyethylene, polypropylene, or polystyrene), a metal sheet (for example, aluminum, zinc, or copper), a plastic film (for example, polyvinyl chloride resin, cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, or polyvinyl acetal), and paper or a plastic film laminated with or deposited with any of the above-described metals. Among them, from the viewpoint of adhesion, a plastic base material such as polyvinyl chloride, polyethylene terephthalate, or polyethylene is preferred, a polyvinyl chloride resin base material is more preferred, and a polyvinyl chloride resin sheet or film is even more preferred, because the ink composition of the invention has good adhesion, and thus is suitable for an unabsorbent recording medium..

### <Irradiation step>

The irradiation step in the image forming method of the invention is further described below. The irradiation step in the invention is not particularly limited as long as it is a step of irradiating the ink composition applied to the above-described recording medium with an active energy ray. The irradiation of the ink composition of the invention with an active energy ray progresses the crosslinking reaction of the compound in the ink composition, thereby fixing an image, and improving the solvent resistance and other properties of the printed material.

Examples of the active energy ray useful in the irradiation step include an ultraviolet ray (hereinafter may be referred to as UV light), visible light, and an electron beam. Among them, UV light is preferred.

The peak wavelength of the UV light depends on the absorption characteristics of the sensitizing dye used as necessary, and is, for example, preferably from 200 to 405 nm, more preferably from 250 to 405 nm, and even more preferably from 250 to 390 nm.

The output of the UV light is preferably 2,000 mJ/cm² or less, more preferably from 10 mJ/cm² to 2,000 mJ/cm², even more preferably from 20 mJ/cm² to 1,000 mJ/cm², and particularly preferably from 50 mJ/cm² to 800 mJ/cm².
In addition, the UV light is preferably applied such that the illumination of the exposed surface is, for example, from 10 mW/cm² to 2,000 mW/cm², and preferably from 20 mW/cm² to 1,000 mW/cm².

The UV light source is often a mercury lamp or a gas/solid laser. Mercury lamps and metal halide lamps are widely known. Substitution with a GaN semiconductor ultraviolet emitting device is industrially and environmentally very effective. LEDs (UV-LEDs) and LDs (UV-LDs) are expected as UV light sources, because they have a compact size, a long life, a high efficiency, and provide a low cost.

The ink composition of the invention is preferably irradiated with the UV light for a period of, for example, from 0.01 seconds to 120 seconds, and preferably from 0.1 seconds to 90 seconds.
The irradiation conditions and basic irradiation method are disclosed in JP-A No. 60-132767. Specifically, a so-called shuttle system of carrying out scanning with a head unit and light sources installed at both sides of the head unit including the ink jetting device, and a system using other non-driven light sources are preferred. The irradiation of actinic radiation is carried out after deposition and heat fixing of ink, for a certain time (for example, from 0.01 seconds to 60 seconds, preferably from 0.01 seconds to 30 seconds, and more preferably from 0.01 seconds to 15 seconds).

### <Heat drying step>

The ink composition jetted on the recording medium is preferably fixed by evaporation of water and an organic solvent optionally used, by heating means. The step of heating and fixing the jetted ink composition of the invention is further described below.
The heating means is not particularly limited as long as it dries the water and organic solvent which are optionally used. Examples of the heating means include a heat drum, warm air, an infrared lamp, a heat oven, and heating plate.
The heating temperature is not particularly limited as long as the water and organic solvent optionally added in the ink composition are evaporated, and a film of the specific polymer compound and an optional polymer binder is formed at the temperature. The heating temperature may be 40°C or higher to achieve these effects, preferably about 40°C to 150°C, and more preferably about 40°C to 80°C.
The drying/heating time is not particularly limited as long as the water and organic solvent optionally added in the ink composition are evaporated, and the film of the resin agents are formed. The drying/heating time may be appropriately established in consideration of the constitution of the ink composition and printing rate.
The solvent-type ink composition fixed by heating may be, as necessary, irradiated with UV light for UV fixation. In order to improve the strength, water resistance, and solvent resistance of the printed material, the ink composition is preferably subjected to UV fixation.

### «Printed material»

The printed material of the invention has been recorded by the image forming method of the invention. Since the printed material of the invention has been recorded by the image forming method of the invention, the recorded image on the printed material has resistance against solvents and water, and achieves good adhesion to the base material.

### EXAMPLES

The invention is more specifically described below with reference to examples, but the present invention will not be limited to these examples. Unless otherwise noted, "part" and "%" are based on the mass.

The coloring material (pigment) dispersions, and the components of the ink compositions used in the Examples and Comparative Examples are described below.

### <Preparation of coloring material dispersion A>

44 g of methyl ethyl ketone was placed in a 500-ml three-necked flask equipped with a stirrer and a cooling tube, heated to 72°C in a nitrogen atmosphere, and a solution which had been prepared by dissolving 0.43 g of dimethyl-2,2'-azobisisobutylate, 30 g of benzyl methacrylate, 5 g of methacrylic acid, and 15 g of methyl methacrylate in 25 g of methyl ethyl ketone was dropped into the flask over a period of 3 hours. After completion of dropping, the reaction was allowed to proceed for further 1 hour, and then a solution which had been prepared by dissolving 0.21 g of dimethyl-2,2'-azobisisobutylate in 1 g of methyl ethyl ketone was added. The temperature was increased to 78°C, and the flask was heated for 4 hours. The reaction solution thus obtained was re-precipitated twice with excess amounts of hexane, the deposited resin was dried, and thus obtaining 43 g of a polymer dispersant D-1.
The constitution of the resin thus obtained was analyzed by ¹H-NMR, and the weight average molecular weight (Mw) was 42,000 as measured by GPC. The acid value was 65.4 mg KOH/g as measured in accordance with JIS K 0070:1992.

10 parts of C.I. PIGMENT BLUE 15:3 (phthalocyanine BLUE A220, manufactured by Dainichiseika Color & Chemicals Mfg. Co., Ltd.), 5 parts of the above-described polymer dispersant D-1, 42 parts of methyl ethyl ketone, 5.5 parts of 1 mol/L NaOH aqueous solution, and 87.2 parts of ion-exchange water were mixed together, and dispersed for 3 hours with a bead mill using zirconia beads having a diameter of 0.1 mm. Methyl ethyl ketone was removed from the dispersion at 55°C under reduced pressure, further water was partially removed, and thus obtaining a coloring material dispersion A having a pigment concentration of 10.2% by mass.

### <Preparation of coloring material dispersion B>

35 parts of IRGALITE BLUE GLVO (cyan pigment, C.I. PIGMENT BLUE 15:3, manufactured by BASF Japan), 12.5 parts of AJISPAR PB821 (polyester-based polymer dispersant, manufactured by Ajinomoto Co., Inc.), and 52.5 parts of propylene carbonate (4-methyl-2-oxo-1,3-dioxolane, manufactured by Wako Pure Chemical Industries, Ltd.) were mixed together, and stirred with a stirrer to be uniform. The pre-dispersion thus obtained was further dispersed for 3 hours in a vertical bead mill (READY MILL, manufactured by Aimex Co., Ltd.) using zirconia beads having a diameter of 0.1 mm, and thus obtaining a coloring material dispersion B. The volume average particle diameter of the coloring material in the coloring material dispersion B was 190 nm as measured by a dynamic light scattering method using NANOTRAC particle size distribution analyzer UPA-EX150 (manufactured by Nikkiso Co., Ltd.).

The above-described exemplary compounds (A-2) to (A-4), (A-6), (A-9), (A-16), and (A-17) were used as the specific polymer compounds. The organic solvents used herein are as follows:
2-pyrrolidone (manufactured by Sigma-Aldrich Japan)
2-methylpropanediol (manufactured by Sigma-Aldrich Japan)
dipropylene glycol monomethyl ether (manufactured by Sigma-Aldrich Japan)
propylene carbonate (manufactured by Wako Pure Chemical Industries, Ltd.).
The comparative polymer used in the Comparative Examples is (A-C) shown below.

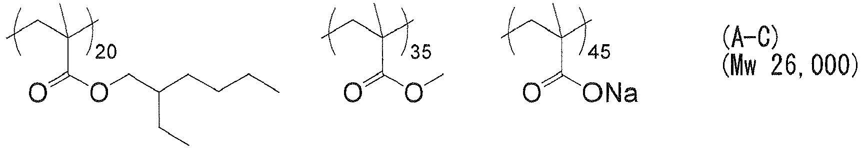

### <Other compounds>

IRG-2959 (polymerization initiator, 1 -[4-(2-hydroxyethoxy)-phenyl]-2-hydroxy-2-methyl-1-propane-1-one, manufactured by BASF)
Modified polyvinyl alcohol (A) described in the Examples of JP-A No. 2008-45047
Of the compounds used in the Examples and Comparative Examples, those not labeled with the name of manufacturer were synthesized in accordance with a known method or its application.

### (Examples 1 to 13, and Comparative Examples 1 and 2)

### <Preparation of ink composition>

Using the coloring material dispersions A and B obtained above, the ink compositions of Examples 1 to 6 and Comparative Examples 1 and 2 were prepared by stirring the ingredients shown in Table 1 for 10 minutes at a rate of 2,500 rpm using a mixer (L4R, manufactured by Silverson Machines, Inc.).
The ink compositions thus obtained were charged into plastic disposable syringes, and filtered through a polyvinylidene fluoride (PVDF) filter having a pore diameter of 5 µm (MILLEX-SV, diameter 25 mm, manufactured by EMD Millipore Corporation), and thus obtaining finished inks. The numerical values for the ingredients listed in Table 1 represent parts by mass.
The viscosity of the ink compositions were measured at 25°C using VISCOMATE VM-10A-L (manufactured by CBC Co., Ltd). The viscosity of Examples 1 to 13 was from 5 to 25 mPa·s.

<Image forming method>

A commercially available inkjet printer (SP-300V, manufactured by Roland DG Corporation) was used as the inkjet recording apparatus.
Each of the ink compositions obtained above was mounted on the inkjet printer, and image was formed on a polyvinyl chloride sheet (AVERY 400 GLOSS WHITE PERMANENT, manufactured by Avery Dennison Japan K.K.), and thus obtaining printed materials.

Subsequently, the ink was irradiated with light of a low-pressure mercury lamp (UVO-CLEANER MODEL 42, manufactured by JELIGHT COMPANY) with an intensity of about 1000 mJ/cm², thereby curing the ink and obtaining a printed material.
Each of the ink compositions and printed materials were subjected to the following evaluations. The evaluation results are shown in Table 1.

### <Evaluation of water resistance>

In accordance with the above-described image forming method, a solid image having an average film thickness (before drying) of 12 µm was formed. Thereafter, the surface of the printed material was rubbed with a swab moistened with distilled water, and evaluated using the following scale. Those rated A or B are practically acceptable.
A: No change was found in the image even after rubbing 10 times or more.
B: The image density deteriorated after rubbing 5 to 9 times.
C: The image density deteriorated after rubbing 2 to 4 times.
D: The image density markedly deteriorated after rubbing only once.

### <Evaluation of solvent resistance>

In accordance with the above-described image forming method, a solid image having an average film thickness (before drying) of 12 µm was formed. Thereafter, the surface of the printed material was rubbed with a swab moistened with isopropyl alcohol, and evaluated using the following scale. Those rated A or B are practically acceptable.
A: No change was found in the image even after rubbing 10 times or more.
B: The image density deteriorated after rubbing 5 to 9 times.
C: The image density deteriorated after rubbing 2 to 4 times.
D: The image density markedly deteriorated after rubbing only once.

### <Evaluation of jettability>

Using the above-described inkjet printer, jetting was carried out for 30 minutes in the standard printing mode. Five minutes after stopping the printer, a solid image and thin lines were recorded on a recording medium (AVERY 400 GLOSS WHITE PERMANENT, manufactured by Avery Dennison Japan K.K.) in the standard printing mode, and the image thus obtained (5 cm x 5 cm) was observed. The observed image was evaluated with the naked eye using the following scale. Those rated A or B are practically acceptable.

A: Dot defects caused by the occurrence of white deletion were not found, and a good image was obtained.
B: Dot defects caused by the occurrence of white deletion were slightly found, but practically acceptable.
C: Dot defects caused by the occurrence of white deletion were apparently found, and practically unacceptable.
D: Normal jetting was impossible.

**Table 1**

| | | Ex 1 | Ex 2 | Ex 3 | Ex 4 | Ex 5 | Ex 6 | Ex 7 | Ex 8 | Ex 9 | Ex 10 | Ex 11 | Ex 12 | Comparative Ex 1 | Comparative Ex 2 | Comparative Ex 3 | Comparative Ex 4 |
|---|---|---|---|---|---|---|---|---|---|---|---|---|---|---|---|---|---|
| Specific polymer compound | A-2 | 7 | - | - | - | - | - | 7 | 7 | - | 18 | 13 | - | - | - | 23 | 35 |
| | A-3 | - | 7 | - | - | - | - | - | - | - | - | - | - | - | - | - | - |
| | A-6 | - | - | 7 | - | - | - | - | - | - | - | - | - | - | - | - | - |
| | A-9 | - | - | - | 7 | - | - | - | - | - | - | - | - | - | - | - | - |
| | A-16 | - | - | - | - | 7 | - | - | - | - | - | - | - | - | - | - | - |
| | A-17 | - | - | - | - | - | 7 | - | - | - | - | - | - | - | - | - | - |
| | A-4 | - | - | - | - | - | - | - | - | 7 | - | - | 7 | - | - | - | - |
| Coloring material | Coloring material dispersion A | 15 | 15 | 15 | 15 | I5 | 15 | 15 | 15 | - | 15 | 15 | - | 15 | 15 | 15 | 15 |
| | Coloring material dispersion B | - | - | - | - | - | - | - | - | 15 | - | - | 15 | - | - | - | - |
| Organic Solvent | 2-pyrrolidone | 15 | 15 | 15 | 15 | 15 | 15 | 5 | 30 | - | 15 | 15 | - | 15 | 15 | 5 | - |
| | 2-methylpropanediol | 5 | 5 | 5 | 5 | 5 | 5 | - | 20 | - | 5 | 5 | - | 5 | 5 | 5 | 5 |
| | Dipropylene glycol monomethyl ether | - | - | - | - | - | - | - | - | 35 | - | - | 35 | - | - | - | - |
| | Propylene carbonate | - | - | - | - | - | - | - | - | 40 | - | - | 40 | - | - | - | - |
| Water | Distilled water | 55 | 55 | 55 | 55 | 55 | 55 | 70 | 25 | - | 42 | 49 | - | 55 | 55 | 49 | 42 |
| Comparative polymer | A-C | - | - | - | - | - | - | - | - | - | - | - | - | 10 | - | - | - |
| Other compounds | Irg-2959 | 3 | 3 | 3 | 3 | 3 | 3 | 3 | 3 | 3 | 3 | 3 | 3 | - | 3 | 3 | 3 |
| | Modified polyvinyl alcohol (A) described in JP-A 2008-45047 | - | - | - | - | - | - | - | - | - | - | - | - | - | 7 | - | - |
| Evaluation results | Water resistance | A | A | A | A | A | A | B | B | A | B | B | A | D | C | C | D |
| | Solvent resistance | A | A | A | A | A | A | A | A | B | A | A | B | B | B | B | C |
| | Jettability | A | A | A | A | A | A | A | A | A | B | A | A | A | C | C | D |

As shown in Table 1, the Examples according to the invention achieved good results in water resistance, solvent resistance, and jettability. On the other hand, the Comparative Examples outside the scope of the invention did not achieve good result in water resistance, solvent resistance, and jettability.

## Claims

1. An ink composition comprising (A) a polymer compound having a partial structure represented by the following Formula (I) in a side chain thereof, and (B) a coloring material, wherein the content of (A) the polymer compound having the partial structure represented by Formula (I) in the side chain thereof is from 0.1 to 20% by mass with respect to the total mass of the ink composition: 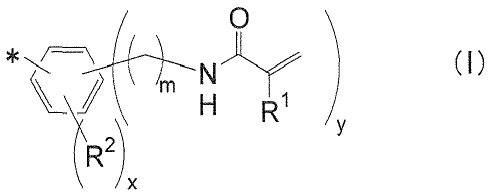 wherein m represents an integer from 0 to 10; x represents an integer from 0 to 4; y represents an integer from 1 to 3; 1 ≤ x + y ≤ 5 is satisfied; R¹ represents a hydrogen atom or a methyl group; when a plurality of R¹s are present, the plurality of R¹s may be identical or different; R² represents an alkyl group, an alkoxy group, or an alkenyl group; when a plurality of R²s are present, the plurality of R²s may be identical or different, and may be bonded to each other to form a ring; and the symbol * represents a bonding position with an adjacent site.

2. The ink composition of claim 1, wherein (A) the polymer compound having the partial structure represented by Formula (I) in the side chain thereof is a polymer containing a repeating unit represented by the following Formula (II): 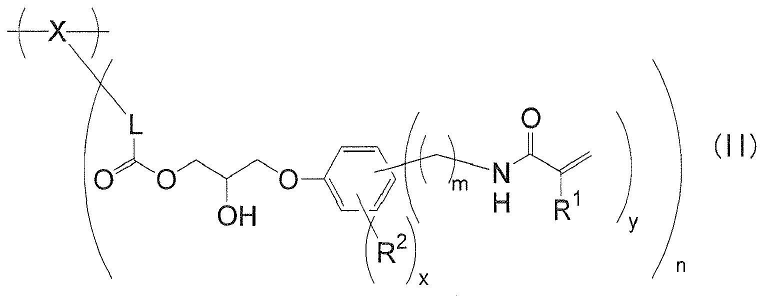 wherein R¹, R², x, and y have the same definitions as R¹, R², x, and y in Formula (I), respectively; L represents a single bond or a divalent linking group; X represents a linking group having a valence of (2 + n); m represents 0 or 1; n represents an integer from 1 to 4; and 1 ≤ x + y ≤ 5 is satisfied.

3. The ink composition of claim 2, wherein the repeating unit represented by Formula (II) is a repeating unit represented by the following Formula (II-A): 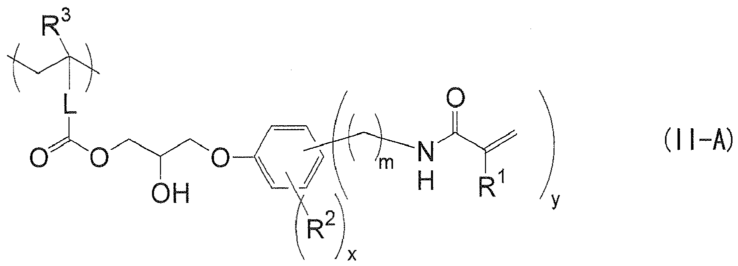 wherein R³ represents a hydrogen atom or a methyl group; and R¹, R², L, x, y, and m have the same definitions as R¹, R², L, x, y, and m in Formula (II), respectively.

4. The ink composition of claim 3, wherein the repeating unit represented by Formula (II-A) is a repeating unit represented by the following Formula (II-B): 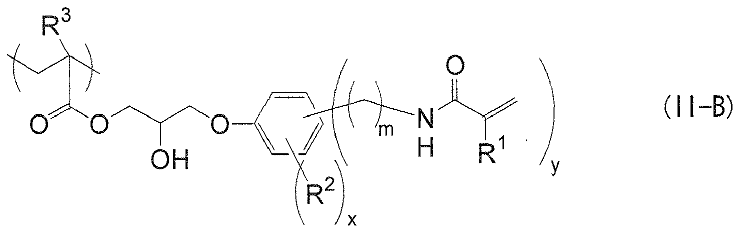 wherein R¹, R², R³, x, y, and m have the same definitions as R¹, R², R³, x, y, and m in Formula (II-A), respectively.

5. The ink composition of any one of claims 1 to 4, wherein the content of (A) the polymer compound having the partial structure represented by Formula (I) in the side chain thereof is from 0.5% by mass to 15% by mass with respect to the total mass of the ink composition.

6. The ink composition of any one of claims 1 to 5, wherein the content of a (meth)acrylamide group in the partial structure represented by Formula (I) in (A) the polymer compound having the partial structure represented by Formula (I) in the side chain thereof is from 0.1 mmol/g to 4 mmol/g with respect to the total mass of (A) the polymer compound.

7. The ink composition of any one of claims 1 to 6, wherein the weight average molecular weight of (A) the polymer compound having the partial structure represented by Formula (I) in the side chain thereof is from 2,000 to 200,000.

8. The ink composition of any one of claims 1 to 7, further comprising (C) an organic solvent.

9. The ink composition of claim 8, wherein the content of (C) the organic solvent is from 5 to 95% by mass with respect to the total mass of the ink composition.

10. The ink composition of claim 8 or 9, wherein the content of (C) the organic solvent is from 40 to 90% by mass with respect to the total mass of the ink composition.

11. The ink composition of any one of claims 1 to 10, further comprising (D) water.

12. The ink composition of claim 11, wherein the content of (D) the water is from 5 to 95% by mass with respect to the total mass of the ink composition.

13. The ink composition of claim 11 or 12, wherein the content of (D) the water is from 40 to 90% by mass with respect to the total mass of the ink composition.

14. The ink composition of any one of claims I to 13, which is used for inkjet recording.

15. An image forming method comprising:
an ink application step of applying the ink composition of any one of claims 1 to 14 to a recording medium;
a step of heat drying the applied ink composition; and
an irradiation step of irradiating the heat dried ink composition with an active energy ray.

16. The image forming method of claim 15, wherein the ink application step is a step of applying the ink composition to the recording medium by an inkjet method.

17. A printed material having an image on a recording medium, wherein the image is formed by the ink composition of any one of claims 1 to 14, or by the image forming method of claim 15 or 16.
